(19) Europäisches Patentamt
European Patent Office
Office européen des brevets

(11) EP 4 316 828 A1

(12) EUROPEAN PATENT APPLICATION
published in accordance with Art. 153(4) EPC

(43) Date of publication:
07.02.2024 Bulletin 2024/06

(21) Application number: 22781017.3

(22) Date of filing: 29.03.2022

(51) International Patent Classification (IPC):
*B32B 27/30 (2006.01)* *C08F 265/00 (2006.01)*
*C08K 5/00 (2006.01)* *C08L 33/00 (2006.01)*
*C08J 5/18 (2006.01)*

(52) Cooperative Patent Classification (CPC):
**B32B 27/30; C08F 265/00; C08J 5/18; C08K 5/00; C08L 33/00**

(86) International application number:
PCT/JP2022/015734

(87) International publication number:
WO 2022/210806 (06.10.2022 Gazette 2022/40)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 29.03.2021 JP 2021056237

(71) Applicant: **Mitsubishi Chemical Corporation**
**Chiyoda-ku**
**Tokyo 100-8251 (JP)**

(72) Inventors:
- **ANABUKI, Mizuki**
  **Tokyo 100-8251 (JP)**
- **EGASHIRA, Takumi**
  **Tokyo 100-8251 (JP)**
- **SHIRATORI, Kazuya**
  **Tokyo 100-8251 (JP)**

(74) Representative: **Ter Meer Steinmeister & Partner Patentanwälte mbB**
**Nymphenburger Straße 4**
**80335 München (DE)**

# (54) RESIN COMPOSITION, FILM, LAMINATE FILM, AND LAMINATE

(57) Provided are a resin composition that can lead to a reduction in fish eyes that cause poor external appearances of films; has a good matte external appearance, and increased thermal stability in forming; can be stably produced; and further, is excellent in transparency; and can be applied to various uses, and a film thereof. The resin composition includes: an acrylic rubber-containing polymer (A) at least having a Tg of lower than 0°C; an acrylic polymer (B) having a reactive group, the acrylic polymer (B) having a Tg of 30°C or higher; and a compound (D) that has a ring structure and a group having a reactive group in a molecule thereof, wherein a total Van der Waals volume $V^{Ring}$ (Å$^3$) corresponding to the ring structure, and a molecular weight X of the compound (D) satisfy the following formula (3).

$$\text{Formula (3): } 0.34 \leq V^{Ring}/X$$

EP 4 316 828 A1

## Description

[Technical Field]

The present invention relates to resin compositions, films, laminate films, and laminates.

[Background Art]

Because of their excellent transparency, beautiful external appearances, and weatherability, formed bodies made from an acrylic resin are widely used for appliance parts, car parts, optical components, decorations, billboards, and so on. In particular, acrylic resin formed bodies comprising an acrylic resin composition having a rubber-containing polymer are widely used.

For example, such a rubber-containing polymer is produced by the method of emulsion polymerization. That is, a polybutadiene latex, a styrene-butadiene copolymer latex, an acrylonitrile-butadiene-styrene copolymer latex, a rubber-containing acrylic graft copolymer latex, or the like is made by, for example, the method of emulsion polymerization. Then, the produced latex is subjected to salting-out, acid solidification, spray drying, freeze drying, or the like. Thereby, a polymer in the form of powder is separated out and collected.

In general, a compounding agent is appropriately added to this polymer in the form of powder in a compounding step. The resultant polymer is molten and kneaded in a single screw extruder, a twin-screw extruder, or the like, extruded as a strand, and cut by the method of cold cutting, hot cutting, or the like, to be pelletized. Next, these pellets are fed to an extruder with a T-die, a forming machine, or the like, to be processed into acrylic resin formed bodies.

Because of its advantages of excellent transparency, weatherability, flexibility, and processability, the acrylic resin formed bodies are used to be laminated on the surfaces of various kinds of resin formed products, wood products, and metal formed products when in the form of film (hereinafter referred to as "acrylic resin films").

Instead of coating, the following are widely used as methods of decorating the surfaces of resin formed products: decalcomania of inserting a film that is decorated by printing or the like into an injection mold, subjecting the film to injection molding, thereafter transferring a decorated layer only to the surface of a formed body, and then, removing the film; insert molding of leaving a decorated film on a resin formed body as the outermost surface of the formed body; in-molding of performing decorating at the same time as injection molding; and laminating a film on the surface of an injection-molded body.

The acrylic resin films are used as decorating films for the foregoing. It has been demanded in recent years that design qualities and decorativeness including luxuriousness and depth be given by matting the surface of a printed acrylic resin film. Patent literature 1 discloses a matte acrylic resin film for such a purpose.

[Citation List]

[Patent Literature]

[Patent Literature 1] WO 2019/244791 A1
[Patent Literature 2] JP 2020-180184 A

[Summary of Invention]

[Technical Problem]

However, according to the research by the inventors of the present invention, defects of a lot of blemishes called fish eyes which are caused by poor dispersion and thermally-degraded products of a polymer having a reactive group which is used as a matting agent are easily produced on the film of patent literature 1; that is, it is difficult to form a film of a less poor external appearance, which is problematic.

Patent literature 2 discloses the (meth)acrylic resin composition that is excellent in transparency, mechanical properties, and elastic modulus for optics, and is for a different purpose from the matte acrylic resin film.

With the foregoing actual circumstances in view, it is an object of the present invention to provide a matte acrylic resin composition that can lead to a reduction in fish eyes that cause poor external appearances of films; has a good matte external appearance, and increased thermal stability in forming; can be stably produced; and further, is excellent in transparency; and can be applied to various uses. Also provided is a film of this matte acrylic resin composition.

[Solution to Problem]

As a result of their intensive research to solve the foregoing problem, the inventors of the present invention found out that a resin composition of a fine texture which are excellent in matting properties, transparency, and thermal stability, and which can lead to a reduction in fish eyes that cause poor external appearances of films; and a film, a laminate film, and a laminate which use such a resin composition are obtained by adding at least one compound (D) that satisfies the formula (3) to an acrylic resin composition comprising an acrylic rubber-containing polymer (A) and an acrylic polymer (B) having a reactive group, and completed the following invention.

$$\text{Formula (3): } 0.34 \leq V^{Ring}/X$$

[1] A resin composition comprising:

an acrylic rubber-containing polymer (A) at least having a Tg of lower than 0°C;
an acrylic polymer (B) having a reactive group, the acrylic polymer (B) having a Tg of 30°C or higher; and
a compound (D) that has a ring structure and a group having a reactive group in a molecule thereof, wherein a total Van der Waals volume $V^{Ring}$ (Å$^3$) corresponding to the ring structure, and a molecular weight X of the compound (D) satisfy the following formula (3).

$$\text{Formula (3): } 0.34 \leq V^{Ring}/X$$

[2] The resin composition according to [1], wherein the compound (D) is a compound represented by the following general formula (1):

[C1]

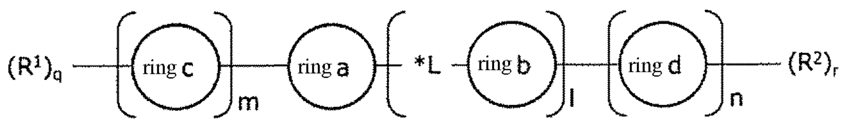
(1)

in the general formula (1),

*L is a direct bond, or a divalent group having no ring structure,
the rings a, b, c and d are each independently a divalent group that may have a substituent group having no ring structure,
l represents 0 or 1,
m and n are each independently an integer of no less than 0,
q and r are each independently an integer of no less than 1, and
$R^1$ and $R^2$ are each a group having a reactive group: where when q is no less than 2, at least two $R^1$'s may be the same group as, and may be different groups from each other, and when r is no less than 2, at least two $R^2$'s may be the same group as, and may be different groups from each other.

[3] The resin composition according to [2], wherein
in the formula (1), $R^1$ and $R^2$ are each one selected from the group consisting of carboxy group, hydroxy group, acid anhydride group, epoxy group, isocyanate group, amide group, amino group, cyano group, and imine group.
[4] The resin composition according to [2] or [3], wherein
in the formula (1), the ring a is one selected from fluorenylene group, phenylene group, and cyclohexyl group, the rings b, c and d are each one selected from phenylene group, naphthylene group, and cyclohexyl group, m is an integer of 0 to 2, n is an integer of 0 to 2, q is an integer of 1 or 2, and r is an integer of 1 or 2.
[5] The resin composition according to any one of [1] to [4], wherein a 5% weight loss temperature of the compound (D) in an air atmosphere is 300°C or higher.
[6] The resin composition according to any one of [1] to [5], wherein the compound (D) is a fluorene compound.
[7] The resin composition according to [6], wherein

the fluorene compound is at least one selected from the group of compounds represented by the following general formula (2), and a content of the fluorene compound is 0.5 to 8.0 mass%:

[C2]

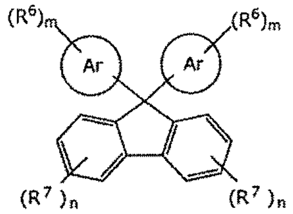

(2)

in the formula (2), the rings Ar each represent a (m+1)valent aromatic hydrocarbon ring,

$R^6$'s each represent a group having a reactive group,
m's each represent an integer of no less than 1,
$R^7$'s each represent a linear or branched alkyl group, and
n's each represent an integer of no less than 0.

[8] The resin composition according to any of [1] to [7], wherein
a content of the acrylic polymer (B) having a reactive group is 0.9 to 40 parts by mass in 100 parts by mass of the acrylic rubber-containing polymer (A), an acrylic polymer (C) having no reactive group that is an optional component, and the acrylic polymer (B) having a reactive group in total.
[9] The resin composition according to any of [1] to [8], wherein
the reactive group in the acrylic polymer (B) is one selected from the group consisting of carboxy group, hydroxy group, acid anhydride group, epoxy group, isocyanate group, amide group, amino group, cyano group, and imine group.
[10] The resin composition according to any one of [1] to [9], wherein
a MFR retention (M2/M1) is 0.85 to 1.15, the MFR retention being a ratio of: a melt flow rate (M1) for 4 minutes in retention time which is measured under conditions that temperature is 240°C, and load is 49 N conforming to JIS K7210; and a melt flow rate (M2) for 20 minutes in retention time which is measured under conditions that temperature is 240°C and load is 49 N conforming to JIS K7210.
[11] The resin composition according to any one of [1] to [10], the resin composition being for a matte film.
[12] A film comprising:

the resin composition according to any one of [1] to [11], wherein
the film has a face having a surface glossiness at 60° (Gs 60°) of less than 100% at least on one side thereof.

[13] The film according to [12], the film having a thickness of 1 to 500 μm.
[14] The film according to [12], wherein a number of fish eyes in 0.5 $m^2$ of the film is less than 500, the film having a thickness of 40 μm.
[15] The film according to [12], wherein a number of fish eyes in 0.5 $m^2$ of the film is less than 400, the film having a thickness of 40 μm.
[16] A matte acrylic resin laminate film having a laminated structure of a matte acrylic resin layer comprising the resin composition according to any one of [1] to [11], and a transparent acrylic resin layer.
[17] A laminate comprising:

a base material; and
the matte acrylic resin laminate film according to [16] which is further laminated on the base material.

[Advantageous Effects of Invention]

According to the present invention, a resin composition that can lead to a reduction in fish eyes that cause poor external appearances of films; has a good matte external appearance, and increased thermal stability in forming; can be stably produced; and further, is excellent in transparency; and can be applied to various uses can be provided. A film, a laminate film, and a laminate which use such a resin composition can be also provided.

[Description of Embodiments]

Hereinafter embodiments of the present invention will be described in detail. The scope of the present invention is not bound by the description. One may make any change other than the following examples appropriately to carry out the present invention as long as the spirit of the present invention is not violated.

In this specification, the expression "A to B" means "no less than A and no more than B" unless otherwise specified, and "(meth)acrylate" means "acrylate and/or methacrylate".

<Resin Composition>

The resin composition of the present invention (which may be hereinafter referred to as "acrylic resin composition") comprises an acrylic rubber-containing polymer (A), an acrylic polymer (B) having a reactive group, and a compound (D).

(Acrylic Rubber-Containing Polymer (A))

As a molecular structure, a polymer which contains a cross-linked rubber or vulcanized rubber of a three-dimensional network structure having a crosslinking point in its molecule is referred to as a "rubber-containing polymer" in this specification. A "rubber" as used herein is defined as a polymer corresponding to an acetone insoluble fraction of the acrylic rubber-containing polymer (A). In production examples 1 to 3 described later, the measured values of the acetone insoluble fractions will be described as the gel contents.

The acrylic rubber-containing polymer (A) is a rubber of a multilayered structure, and the basic structure thereof includes an elastic polymer having a glass transition temperature (which is hereinafter also referred to as a "Tg") lower than 0°C (I-A), and a rigid polymer having a Tg higher than 20°C (I-B).

Preferably, the acrylic rubber-containing polymer (A) at least has a Tg of lower than 0°C. Here, "at least has a Tg of lower than 0°C" means that when the acrylic rubber-containing polymer (A) has plural Tg's, at least one of the Tg's is lower than 0°C, and when the acrylic rubber-containing polymer (A) has a single Tg, this Tg is lower than 0°C.

The Tg of the elastic polymer (I-A) is preferably no less than -60°C while is preferably no more than -10°C.

The Tg of the rigid polymer (I-B) is preferably no less than 60°C while is preferably no more than 150°C.

The Tg's are calculated using the Tg values of the homopolymers of the monomer components (described in 1989. Polymer Handbook, edited by J. BRANDRUP: Interscience) from the FOX equation.

In addition, the Tg's can be measured by the following method. First, the acrylic resin composition is molten and formed into a sheet, and a test piece having a thickness of 1 mm, a width of 6 mm, and a length of 65 mm in dimensions is cut out of the sheet. The storage modulus (E') and the loss modulus (E") of the test piece are measured with a dynamic mechanical analyzer in a tension mode under the conditions that the initial distance between chucks is 2 cm, the measuring frequency is 0.1 Hz, the measuring temperature ranges from - 90 to 150°C, the heating rate is 2°C/min, and the nitrogen flow is 200 mL/min, conforming to ISO 6721-4. From the equation $\tan\delta = E''/E'$, the $\tan\delta$ (loss tangent) at each temperature is calculated. Next, when the $\tan\delta$ values are plotted against the temperature, at least two peaks appear in this plot. The temperature corresponding to the peak present at the lowest temperature among those peaks is defined as the Tg of the elastic polymer (I-A), and the temperature corresponding to the peak at the highest tan6 value among the peaks present at temperatures higher than 20°C is defined as the Tg of the rigid polymer (I-B). The rigid polymer (I-B) is preferably the outermost layer of the acrylic rubber-containing polymer.

An example of the acrylic rubber-containing polymer (A) in the present invention is a rubber-containing polymer by multistage polymerization which is constituted of at least a known acrylic acid alkyl ester and/or methacrylic acid alkyl ester, and a graft crossing agent.

A specific example of a rubber-containing polymer by multistage polymerization as used herein is a polymer formed by polymerizing at least an acrylic acid alkyl ester having C1-8 ester and/or a methacrylic acid alkyl ester having C1-4 ester, and a graft crossing agent to form the elastic polymer (I-A), and polymerizing at least a methacrylic acid alkyl ester having C1-4 ester to form the rigid polymer (I-B) in this order.

An example of the elastic polymer (I-A) is a polymer that is constituted of an acrylic acid alkyl ester having C1-8 ester and/or a methacrylic acid alkyl ester having C1-4 ester (A1) (which is hereinafter referred to as "component (A1)"), another monomer (A2) that is used as necessary (which is hereinafter referred to as "component (A2)"), a multifunctional monomer (A3) that is used as necessary (which is hereinafter referred to as "component (A3)"), and a graft crossing agent (A4) (hereinafter referred to as "component (A4)"), and that is formed by polymerization first when the rubber-containing polymer is formed by multistage polymerization.

In the component (A1), the acrylic acid alkyl ester having C1-8 ester may be either a linear or branched chain. Specific examples of the acrylic acid alkyl ester having C1-8 ester include methyl acrylate, ethyl acrylate, propyl acrylate, butyl acrylate, 2-ethylhexyl acrylate, and n-octyl acrylate. One of them may be used alone, and two or more of them

may be used in combination. Among them, ones having lower Tg's are preferable, and butyl acrylate is more preferable.

In the component (A1), the methacrylic acid alkyl ester having C1-4 ester may be either a linear or branched chain. Specific examples of the methacrylic acid alkyl ester having C1-4 ester include methyl methacrylate, ethyl methacrylate, propyl methacrylate, and butyl methacrylate. One of them may be used alone, and two or more of them may be used in combination.

The used amount of the component (A1) is preferably 60 to 100 mass% in 100 mass% of the components (A1) to (A4) in total in view of flexibility, transparency and processability.

Examples of the component (A2) include acrylic acid alkyl ester monomers such as an acrylic acid alkyl ester having C9 or more ester, an acrylic acid ester having C4 or less alkoxy, and cyanoethyl acrylate; acrylamide; (meth)acrylic acid; styrene; alkyl-substituted styrene; and (meth)acrylonitrile.

The used amount of the component (A2) is preferably 0 to 40 mass% in 100 mass% of the components (A1) to (A4) in total in view of flexibility.

Examples of the component (A3) include alkylene glycol dimethacrylates such as ethylene glycol dimethacrylate, 1,3-butylene glycol dimethacrylate, 1,4-butylene glycol dimethacrylate, and propylene glycol dimethacrylate; and polyvinylbenzene such as divinylbenzene and trivinylbenzene.

The used amount of the component (A3) is preferably 0 to 10 mass% in 100 mass% of the components (A1) to (A4) in total in view of flexibility.

Examples of the component (A4) include allyl, methallyl or crotyl esters of copolymerizable $\alpha$,$\beta$-unsaturated carboxylic acid or dicarboxylic acid; triallyl cyanurate; and triallyl isocyanurate. Among them, allyl esters of acrylic acid, methacrylic acid, maleic acid or fumaric acid are preferable, and allyl methacrylate is more preferable.

In the component (A4), mainly a conjugated unsaturated bond of its ester reacts much faster than allyl, methallyl, or crotyl group to be chemically bonded.

The used amount of the component (A4) is preferably 0.1 to 5 mass%, and more preferably 0.5 to 2 mass% in 100 mass% of the components (A1) to (A4) in total in view of flexibility. These lower limits of the ranges are significant in terms of the effective amount of grafting; and these upper limits of the ranges are significant in that the amount of reaction with the polymer to be formed by next polymerization is appropriately suppressed to prevent a decrease in elasticity of a rubber elastic body.

The content of the elastic polymer (I-A) in the rubber-containing polymer by multistage polymerization is preferably 5 to 70 mass%, and more preferably 5 to 50 mass% in view of flexibility, transparency, and processability.

The elastic polymer (I-A) may be formed by polymerization including two or more stages. When the elastic polymer (I-A) is formed by polymerization including two or more stages, the ratio of the monomer components used in each stage may be different.

The rigid polymer (I-B) is a component involving the formability and the mechanical properties of the rubber-containing polymer by multistage polymerization. The rigid polymer (I-B) is a polymer that is constituted of a methacrylic acid alkyl ester having C1-4 ester (B1) (which is hereinafter referred to as "component (B1)"), and another monomer (B2) that is used as necessary (which is hereinafter referred to as "component (B2)"), and is formed by polymerization last when the rubber-containing polymer is formed by multistage polymerization. Preferred specific examples of the components (B1) and (B2) are the same as those of the components (A1) and (A2) of the elastic polymer (I-A), respectively.

The used amount of the component (B1) is preferably 51 to 100 mass% in 100 mass% of the components (B1) and (B2) in total in view of transparency.

The Tg of the rigid polymer (I-B) only is preferably no less than 60°C, more preferably no less than 70°C, and further preferably no less than 80°C in view of mechanical properties; and is preferably no more than 150°C, and more preferably no more than 130°C in view of formability of a film.

The content of the rigid polymer (I-B) in the rubber-containing polymer by multistage polymerization is preferably 30 to 95 mass%, and more preferably 40 to 70 mass% in view of flexibility, transparency, and processability.

The basic structure of the rubber-containing polymer by multistage polymerization shall include the elastic polymer (I-A) and the rigid polymer (I-B). One or more layers of an intermediate polymer (I-C) may be formed by polymerization after the elastic polymer (I-A) is formed by polymerization and before the rigid polymer (I-B) is formed by polymerization. The intermediate polymer (I-C) has one intermediate composition between the composition of the elastic polymer (I-A) and the composition of the rigid polymer (I-B). The transparency of the film to be obtained can be made to be better by providing the intermediate polymer (I-C).

The content of the intermediate polymer (I-C) in the rubber-containing polymer by multistage polymerization is preferably 0 to 35 mass%, and more preferably 0 to 25 mass% in 100 mass% of the elastic polymer (I-A) and the rigid polymer (I-B) in total.

The mean particle diameter of the acrylic rubber-containing polymer (A) is preferably no less than 0.03 $\mu$m, more preferably no less than 0.07 $\mu$m, and further preferably no less than 0.09 $\mu$m in view of the mechanical properties of the film; and is preferably no more than 0.3 $\mu$m, more preferably no more than 0.15 $\mu$m, and further preferably no more than 0.13 $\mu$m in view of the transparency of the film.

The mass average molecular weight (Mw) of the acetone soluble fraction of the acrylic rubber-containing polymer (A) is preferably no less than 20,000, and more preferably no less than 30,000; and is preferably no more than 100,000, and more preferably no more than 80,000. When this Mw is no less than 20,000, the mechanical strength of the film to be obtained is improved, and cracks in forming can be suppressed. Moreover, the film to be obtained develops stress-whitening resistance. When this Mw is no more than 100,000, the film to be obtained has high flexibility and is excellent in processability, and a bent portion of the film is not whitened when the film is bent after laminated on a base material such as a steel plate, which leads to good external appearances of various members to be obtained.

One acrylic rubber-containing polymer (A) may be used alone, or two or more acrylic rubber-containing polymers (A) may be used in combination.

The gel content of the acrylic rubber-containing polymer (A) is preferably 40 mass% to 99 mass%, more preferably 50 mass% to 95 mass%, and further preferably 55 mass% to 90 mass%. When the acrylic rubber-containing polymer (A) has a gel content of no less than 40 mass%, the mechanical strength of the formed body to be obtained can be further improved, so that its handleability becomes easier. Especially when the formed body is in the form of film, it becomes easy to laminate the formed body on the surface of any of various three-dimensional resin formed products, wood products, and metal formed products directly or after laminating the formed body on a resin sheet. Such a formed body also has excellent design qualities.

When the acrylic rubber-containing polymer (A) has a gel content of no more than 99 mass%, its fluidity and thermal stability in forming do not become too poor, the melt viscosity can be suppressed at a lower level, and the retention in a forming machine can be reduced more to suppress the thermal degradation of the resin, which is preferable. When the formed body to be obtained is a film, any defects such as a time-course increase of blemishes called fish eyes which are caused by thermally-degraded products are hardly produced so that melt extrusion including film formation can be performed for a relatively long time.

Here, the gel content of the acrylic rubber-containing polymer (A) can be obtained by calculating the following equation.

$$G' = (m'/M') \times 100$$

In the equation, G' (%) is the gel content of the acrylic rubber-containing polymer (A), M' is the mass of a predetermined amount of the acrylic rubber-containing polymer (A) (also called mass before extraction), and m' is the mass of the acetone insoluble fraction of this predetermined amount of the acrylic rubber-containing polymer (A) (also called mass after extraction).

The gel content of the acrylic resin composition is preferably no more than 80 mass%. Thus, when the gel content of the acrylic rubber-containing polymer (A) is no less than 80 mass%, the gel content of the acrylic resin composition can be adjusted by further containing an acrylic polymer (C) having no reactive group that will be described later. The ratio of the content of the acrylic rubber-containing polymer (A) and the content of the acrylic polymer (C) having no reactive group in the acrylic resin composition is preferably 100:0 to 40:60 (parts by mass), and is more preferably 95:5 to 70:30 (parts by mass).

(Acrylic Polymer (B) Having Reactive Group)

The acrylic polymer (B) having a reactive group is not particularly limited, and may be a linear chain acrylic polymer having a reactive group as a chemical structure. The acrylic polymer (B) having a reactive group (hereinafter, the "acrylic polymer (B)" means the same) can function as a matting agent with which the luster of the film or the formed body to be obtained using the resin composition of the present embodiment is decreased to bring about a good external appearance.

A reactive group as used herein means a group that makes units of the acrylic polymer (B) react with each other, and is not especially limited. Examples of this reactive group include carboxy group, hydroxy group, acid anhydride group, epoxy group, isocyanate group, amide group, amino group, cyano group, and imine group.

The reactive group of the acrylic polymer (B) may be in a monomer moiety constituting this polymer. That is, the acrylic polymer having a desired reactive group (B) can be produced by polymerizing a monomer having this desired reactive group. The acrylic polymer (B) having a reactive group may be a homopolymer of a monomer having the reactive group, may be a copolymer of two or more monomers each having the reactive group, and may be a copolymer of a monomer having the reactive group, and a monomer not having the reactive group.

Examples of a monomer having the reactive group as used herein include hydroxyl alkyl esters of (meth)acrylic acid, acrylic acid, methacrylic acid, carboxy ethyl (meth)acrylate, maleic acid, fumaric acid, crotonic acid, (meth)acrylamide, diethylacrylamide, aminoethyl (meth)acrylate, glycidyl alkyl (meth)acrylate, (meth)acryloyl isocyanate, and cyanoethyl acrylate. Among them, the acrylic polymer (B) is preferably a polymer having a hydroxy group as the reactive

group, and is specifically preferably a polymer having a hydroxyalkyl ester of (meth)acrylic acid as a monomer unit in view of better matte external appearances of the film and formed body to be obtained.

Example of a hydroxyl alkyl ester of (meth)acrylic acid as used herein include 2-hydroxyethyl methacrylate, 2-hydroxypropyl methacrylate, 2,3-dihydroxypropyl methacrylate, 2-hydroxyethyl acrylate, and 4-hydroxybutyl acrylate. Among them, 2-hydroxyethyl methacrylate is preferable in view of most excellent development of matting.

A monomer having no reactive functional group as used herein is not particularly limited, and an example thereof is a (meth)acrylic acid alkyl ester having no reactive group.

Examples of a methacrylic acid alkyl ester having no reactive group as used herein include methyl methacrylate, ethyl methacrylate, n-propyl methacrylate, i-propyl methacrylate, n-butyl methacrylate, i-butyl methacrylate, and t-butyl methacrylate. One of them may be used alone, and two or more of them may be used in combination. Among them, a methacrylic acid alkyl ester having C1 or more ester is preferable while a methacrylic acid alkyl ester having C13 or less ester is preferable, a methacrylic acid alkyl ester having C9 or less ester is more preferable, and a methacrylic acid alkyl ester having C6 or less ester is further preferable. Among them, methyl methacrylate is especially preferable in view of weatherability.

Examples of an acrylic acid alkyl ester having no reactive group as used herein include methyl acrylate, ethyl acrylate, n-propyl acrylate, i-propyl acrylate, n-butyl acrylate, i-butyl acrylate, t-butyl acrylate, and 2-ethylhexyl acrylate. One of them may be used alone, and two or more of them may be used in combination. Among them, an acrylic acid alkyl ester having C1 or more ester is preferable while an acrylic acid alkyl ester having C12 or less ester is preferable, an acrylic acid alkyl ester having C8 or less ester is more preferable, and an acrylic acid alkyl ester having C6 or less ester is further preferable.

An example of a specific structure of the acrylic polymer (B) is a polymer obtained by polymerizing the monomer components of a 1 to 40 mass% hydroxyl alkyl ester of (meth)acrylic acid, a 10 to 99 mass% methacrylic acid alkyl ester having C1-13 alkyl, and a 0 to 20 mass% acrylic acid alkyl ester having C1-12 alkyl on the basis of the total 100 mass% monomer components constituting this polymer.

The proportion of the hydroxyl alkyl ester of (meth)acrylic acid in the acrylic polymer (B) preferably ranges from 1 to 40 mass%. When this proportion is no less than 1 mass%, the matting effect becomes sufficient. When this proportion is no more than 40 mass%, the water-whitening resistance of the film becomes better. This proportion is more preferably 5 to 35 mass%, and further preferably 10 to 30 mass% in view of matting properties, and water-whitening resistance.

The proportion of the methacrylic acid alkyl ester having C1-13 alkyl in the acrylic polymer (B) is preferably 10 to 99 mass%, and in view of water-whitening resistance, more preferably 50 to 95 mass%.

The proportion of the acrylic acid alkyl ester having C1-12 alkyl in the acrylic polymer (B) is more preferably 0 to 25 mass% for leading to better water-whitening resistance of the film; and further preferably 0.1 to 20 mass%, and much further preferably 0.1 to 15 mass% in view of thermolytic properties, and water-whitening resistance.

The acrylic polymer (B) may further include at least one copolymerizable vinyl monomer having no reactive group. Examples of this copolymerizable vinyl monomer having no reactive group include aromatic vinyl compounds such as styrene, vinyl cyanide-based monomers such as acrylonitrile, unsaturated dicarboxylic acid anhydrides such as maleic anhydride and itaconic anhydride, N-phenylmaleimide, and N-cyclohexylmaleimide. In particular, when an unsaturated dicarboxylic acid anhydride such as maleic anhydride and itaconic anhydride, N-phenylmaleimide, or N-cyclohexylmaleimide is used, the glass transition temperature of the acrylic polymer (B) can be increased, which leads to much better water-whitening resistance of the film. The proportion of this copolymerizable vinyl monomer is preferably 0 to 50 mass%.

The glass transition temperature of the acrylic polymer (B) is not particularly limited, and is preferably 30°C or higher, and is preferably 30 to 120°C in general. In view of water-whitening resistance, this glass transition temperature is preferably 30°C or higher, and more preferably higher than 50°C. This glass transition temperature is preferably 120°C or lower, and is more preferably 110°C or lower in view of dispersibility in melting and kneading in a compounding step. The Tg of the polymer (B) is calculated using the Tg values of the homopolymers of the monomer components (described in 1989. Polymer Handbook, edited by J. BRANDRUP: Interscience) from the FOX equation.

The intrinsic viscosity of the acrylic polymer (B) is not particularly limited, and is preferably adjusted to be in the range from 0.05 to 0.3 L/g in view of development of matting, and the external appearance of a face having matting properties. This intrinsic viscosity further preferably ranges from 0.06 to 0.15 L/g. The intrinsic viscosity of the polymer (B) is the value measured at 25°C with an automated viscometer AVL-2C manufactured by SUN Electronic Industries Corporation, and chloroform as a solvent.

When the polymerization of the acrylic polymer (B) is performed, a polymerization regulator such as a mercaptan is preferably used for adjusting the molecular weight. Examples of a mercaptan as used herein include n-octyl mercaptan, n-dodecyl mercaptan, and t-dodecyl mercaptan. However, a mercaptan as used herein is not limited to them, and any of conventionally known various mercaptans can be also used.

The Mw of the polymer (B) is preferably no less than 30,000, and more preferably no less than 50,000 while preferably no more than 250,000, and more preferably no more than 200,000. When the polymer (B) has a Mw of no

less than 30,000, the dispersibility in the resin composition becomes much better, and when the polymer (B) has a Mw of no more than 250,000, a matte external appearance of a fine texture easily develops.

Suspension polymerization, emulsion polymerization, or the like is preferable as the method of producing the acrylic polymer (B), but the method is not particularly limited to them. As an initiator for suspension polymerization as used herein, any of conventionally known various initiators, specifically, organic peroxides and azo compounds can be used. As a suspension stabilizer as used herein, any of conventionally known various suspension stabilizers, specifically, organic colloidal polymer materials, inorganic colloidal polymer materials, inorganic fine particles, and combination of any of them and a surfactant can be used. Suspension polymerization is usually carried out by subjecting monomers and a polymerization initiator together to aqueous suspension in the presence of a suspension stabilizer. Other than this, suspension polymerization can be also carried out with a polymer that is soluble in a monomer dissolved in the monomer.

When an inorganic suspension stabilizer is used, preferably, the content of the inorganic materials in the polymer (B) is reduced by cleaning beads of the obtained polymer (B) with water in order to suppress fish eyes in the film to be obtained to reduce unprinted portions. Examples of the method of such cleaning with water include: dispersing-cleaning of adding to and dispersing in beads of a thermoplastic resin a cleaning fluid such as nitric acid to lead to solid-liquid separation; and cleaning-through of cleaning beads of a thermoplastic resin through a cleaning fluid. The cleaning temperature is preferably 10 to 90°C in view of cleaning efficiency.

The mean particle diameter of the polymer (B) is preferably no more than 300 μm, and more preferably no more than 150 μm in order to efficiently remove cullet by sieving without lowering the product yield or in order to efficiently remove inorganic materials by cleaning in the aforementioned post-treatment such as sieving and cleaning with water after the polymerization is ended. This mean particle diameter is preferably no less than 10 μm, and more preferably no less than 20 μm in view of the handleability of the polymer. The mean particle diameter of the polymer (B) can be measured with a laser diffraction and scattering particle size distribution analyzer LA-910 manufactured by Horiba, Ltd.

The adding amount of the acrylic polymer (B) is preferably 0.9 to 40 parts by mass, more preferably 1.4 to 20 parts by mass, and further preferably 1.9 to 15 parts by mass to 100 parts by mass of the resins constituting the acrylic resin composition (the total parts by mass of the acrylic rubber-containing polymer (A), the acrylic polymer (C) having no reactive group, which is an optional component, and the acrylic polymer (B) having a reactive group).

When the adding amount of the acrylic polymer (B) is no less than 0.9 parts by mass, a sufficiently matte external appearance develops. The adding amount of the acrylic polymer (B) is preferably no more than 40 parts by mass because the fluidity and the thermal stability in forming do not become too poor, the melt viscosity can be suppressed at a lower level, and the retention in a forming machine can be reduced more to suppress the thermal degradation of the resin. On the film to be obtained, any defects such as a time-course increase of blemishes called fish eyes which are caused by thermally-degraded products are hardly produced so that melt extrusion including film formation can be performed for a relatively long time.

(Acrylic Polymer (C) Having no Reactive Group)

The acrylic resin composition of the present invention may comprise the acrylic polymer (C) having no reactive group (hereinafter the "acrylic polymer (C)" means the same). The acrylic polymer (C) having no reactive group is a linear chain polymer that comprises no less than 30 mass% (meth)acrylic acid alkyl ester unit having no reactive group as a constitutional unit, and has substantially no reactive group. Examples of this (meth)acrylic acid alkyl ester having no reactive group include the aforementioned monomers. In the present invention, "having substantially no reactive group" shall mean that the total proportion of the monomers having a reactive group in 100 mass% of the monomer components constituting the polymer is no more than 1.0 mass%.

The acrylic polymer (C) is preferably a copolymer comprising a methacrylic acid alkyl ester, and an acrylic acid alkyl ester as monomer units. In this case, the proportion of the methacrylic acid alkyl ester in 100 mass% of the monomer components constituting the acrylic polymer (C) is preferably no less than 50 mass%, more preferably no less than 85 mass%, and further preferably no less than 92 mass% in view of weatherability while preferably no more than 100 mass%, and more preferably no more than 99.9 mass% in view of heat resistance. The proportion of the acrylic acid alkyl ester is preferably no less than 0 mass%, and more preferably no less than 0.1 mass% in view of heat resistance; and preferably no more than 50 mass%, more preferably no more than 15 mass%, and further preferably no more than 8 mass% in view of weatherability.

The acrylic polymer (C) may also comprise any other vinyl monomer as a monomer unit. Specific examples of such a vinyl monomer include, as another copolymerizable vinyl monomer, aromatic vinyl compounds having no reactive group, such as styrene, chlorostyrene, methyl styrene, and any other substituted styrenes having no reactive group, and lower alkoxy acrylates. One of them may be used alone, and two or more of them may be used in combination. In view of the water-whitening resistance of the film, the proportion of these vinyl monomer in 100 mass% of the total monomer units constituting the polymer (C) is preferably no less than 0 mass% while preferably no more than 49 mass%.

The glass transition temperature (Tg) of the acrylic polymer (C) is preferably 80°C or higher, and more preferably 85°C or higher in view of heat resistance; and preferably 120°C or lower, and more preferably 110°C or lower in view of the formability of the film or formed body to be obtained.

The mass average molecular weight (Mw) of the acrylic polymer (C) is preferably no less than 10,000, and more preferably no less than 30,000 in view of mechanical properties while preferably no more than 250,000, and more preferably no more than 200,000 in view of the formability of the film or formed body to be obtained.

Any commercial product may be used as the acrylic polymer (C) satisfying the above physical properties. Examples of such a commercial product include Acrypet VH, Acrypet MD, and Acrypet MF (all trade names) manufactured by Mitsubishi Chemical Corporation.

The acrylic resin composition of the present invention may further comprise, for example, a high-molecular-weight acrylic polymer and a high-molecular-weight acrylic external lubricant as acrylic resin modifiers in view of improving various physical properties and productivity of the matte acrylic resin film.

When the acrylic resin composition is formed, film forming stability is improved and build-ups can be reduced by containing a high-molecular-weight acrylic polymer.

A high-molecular-weight acrylic polymer as used herein is a polymer that comprises a (meth)acrylic acid alkyl ester as a constitutional unit and has substantially no reactive group. Any of the aforementioned monomers can be preferably used as a (meth)acrylic acid alkyl ester having no reactive group as used herein.

The mass average molecular weight (Mw) of this high-molecular-weight acrylic polymer is not particularly limited, and is preferably no less than 50,0000, and more preferably no less than 1,000,000 while preferably no more than 5,000,000, more preferably no more than 4,000,000, and further preferably no more than 3,500,000. When the Mw is no less than 500,000, the swell ratio of the resin composition becomes large, and build-ups in film formation are reduced, so that an external appearance becomes better. When the Mw is no more than 5,000,000, the transparency of the film to be obtained becomes better.

The adding amount of the high-molecular-weight acrylic polymer preferably ranges from 0.1 to 10 parts by mass on the basis of 100 parts by mass of the resins constituting the acrylic resin composition. This adding amount is more preferably no less than 0.5 parts by mass, and further preferably no less than 1 part by mass in view of reducing build-ups in film formation; while more preferably no more than 5 parts by mass, and further preferably no more than 3 parts by mass in view of film transparency. The smaller the adding amount of the high-molecular-weight acrylic polymer is, the lower the gloss value of the acrylic film is.

Any commercial product may be used as the high-molecular-weight acrylic polymer. Examples of such a commercial product include METABLEN P-531A, METABLEN P-530A, METABLEN P-551A, METABLEN P-550A, METABLEN P-501A, METABLEN P-570A, METABLEN P-700 and METABLEN P-710 (all trade names) manufactured by Mitsubishi Chemical Corporation.

The resin composition can be given lubricity by containing a high-molecular-weight acrylic external lubricant, and thus, can lead to suppressed shear heating in kneading in an extruder, and suppressed residence in an extruder to further reduce fish eyes caused by thermal degradation of the resin. In addition, bloom on the surface of the formed product, and plate-out on a mold in molding hardly appear.

The adding amount of the high-molecular-weight external lubricant preferably ranges from 0.1 to 10 parts by mass on the basis of 100 parts by mass of the resins constituting the acrylic resin composition. This adding amount is more preferably no less than 0.5 parts by mass, and further preferably no less than 0.8 parts by mass in view of suppressing shear heating in kneading in an extruder, and suppressing residence in an extruder. In contrast, this adding amount is more preferably no more than 5 parts by mass, and further preferably no more than 3 parts by mass in view of the transparency and the matte external appearance of the film.

Any commercial product may be used as the high-molecular-weight acrylic external lubricant. An example of such a commercial product is METABLEN L-1000 (trade name) manufactured by Mitsubishi Chemical Corporation.

(Compound (D))

The inventors of the present invention found out that fish eyes that cause a poor external appearance of the matte acrylic resin film to be obtained by forming the acrylic resin composition can be reduced by adding the compound (D) to the acrylic resin composition. The mechanism to develop such an effect through the addition of the compound (D) is not clarified. According to the inventors' prediction, the presence of the compound (D) around the acrylic polymer (B) having a reactive group is considered to cause the dispersibility of the acrylic polymer (B) having a reactive group to be better in kneading of the acrylic resin composition.

Preferably, the compound (D) has the structure that satisfies the following requirements: to have a bulky group such as aromatic rings and alicyclic compounds at its center (requirement 1); to have at least two or more reactive groups (requirement 2); and wherein the bulky group does not inhibit the reactive groups of the compound (D) from being in the proximity of the acrylic polymer (B) having a reactive group (requirement 3).

For example, none of fluorene, and 2-phenoxyethanol meet requirement 2; and none of polyethylene glycol, and bis(1,2-hydroxystearic acid)magnesium meet requirement 1.

polyethylene glycol (n = 230 to 160000000)

[C3]

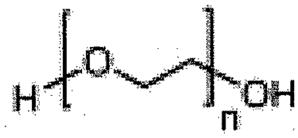

bis(1,2-hydroxystearic acid)magnesium

[C4]

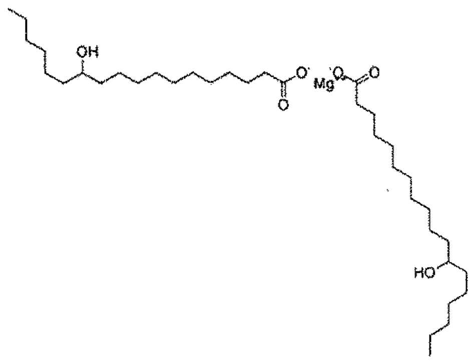

None of the following compounds that are each used as an ultraviolet absorber meet requirement 3.

[C5]

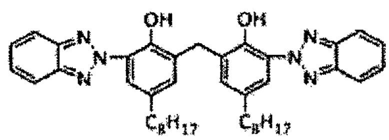

[C6]

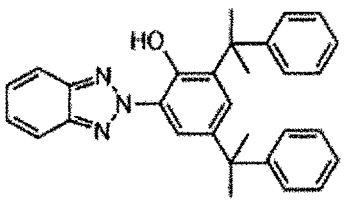

The compound (D) has a ring structure and a reactive group in its molecule. The total Van der Waals volume

corresponding to the ring structure $V^{Ring}$ (Å$^3$), and the molecular weight X of the compound (D) satisfy the following formula (3).

$$\text{Formula (3): } 0.34 \leq V^{Ring}/X$$

When the $V^{Ring}/X$ is no less than 0.34, the dispersibility of the acrylic polymer (B) having a reactive group becomes better so that fish eyes of the matte acrylic resin film can be reduced. The $V^{Ring}/X$ is more preferably no less than 0.35, further preferably no less than 0.36, and particularly preferably no less than 0.40. The upper limit of the $V^{Ring}/X$ is not particularly limited, but for example, is preferably no more than 1.5, and more preferably no more than 1.0.

The total Van der Waals volume corresponding to the ring structure $V^{Ring}$ (Å$^3$) can be calculated by the following method.

First, single bonds bonding the ring and the other moiety are broken. The resultant dangling bonds are terminated with hydrogen atoms, and thereby, model molecules corresponding to the ring moiety and the other moiety are created. At this time, single bonds bonding rings to each other are not broken. Subsequently, the structure of the molecule before cleaved and the structures of the respective model molecules after cleaved are optimized using a Universal Force Field (J. Am. Chem. Soc. 114 (1992) 10024) to calculate the Van der Waals volumes. The van der Waals volumes of the model molecules are increased by bonding hydrogen atoms to the dangling bonds. Thus, the total Van der Waals volume corresponding to the ring moiety $V^{Ring}$ (Å$^3$) can be calculated by the following equation in view of the correction of subtracting this increase.

[Math. 1]

$$V^{Ring} = V_{model}^{Ring} - N_H^{Ring} \times V_H$$

where

[Math. 2]

$$V_{model}^{Ring}$$

is the total Van der Waals volume of the model molecule corresponding to the ring moiety, and

[Math. 3]

$$N_H^{Ring}$$

is the total number of the hydrogen atoms used for terminating the dangling bonds on the side corresponding to the ring moiety when the model molecule corresponding to the ring moiety is created, and $V_H$ is the mean value of the volumes each increased per one hydrogen atom bonded after the bonds are broken, and is calculated by the following equation.

[Math. 4]

$$V_H = (V_{model} - V_b)/N_H$$

where $V_{model}$ is the total Van der Waals volume of all the model molecules terminated with hydrogen atoms after cleaved, $V_b$ is the Van der Waals volume of the molecule before cleaved, and $N_H$ is the total number of the hydrogen atoms used for terminating the dangling bonds when all the model molecules are created. RDKit (http://www.rdkit.org) can be used for optimizing the structures and calculating the Van der Waals volumes.

The molecular weight X of the compound (D) is usually 50 to 5000. When the molecular weight is within this range, both the ring structure and the group having a reactive group are included in the molecule, which is preferable in view of reducing fish eyes. The molecular weight X is preferably no less than 80, more preferably no less than 100, and further preferably no less than 120 while preferably no more than 4000, more preferably no more than 2000, and further preferably no more than 1000. The molecular weight X can be calculated from the atomic weights of the atoms constituting the compound (D).

The ring structure in the compound (D) is a divalent ring structure group that may have a substituent group having no ring structure.

This divalent ring structure group is not particularly limited, and examples thereof include divalent aromatic hydrocarbon groups, divalent aromatic heterocyclic groups, divalent alicyclic hydrocarbon groups, and divalent annular aliphatic heterocyclic groups.

A divalent aromatic hydrocarbon group as used herein is not particularly limited, and C6-30 divalent aromatic hydrocarbon is preferable; and specific examples thereof include fused polycyclic aromatic hydrocarbon groups such as phenylene group, naphthylene group, indanylene group, indenylene group, fluorenylene group, anthracenylene group, azulenylene group, pyrenylene group, and perylenylene group.

A divalent aromatic heterocyclic group as used herein is not particularly limited, and C2-30 divalent aromatic heterocycle is preferable; and specific examples thereof include monocyclic aromatic heterocyclic groups such as thienylene group, furanylene group, pyridinylene group, pyrrolylene group, pyrazinylene group, thiazolylene group, oxazolylene group, and triazolylene group; and fused polycyclic aromatic heterocyclic groups such as thienothienylene group, benzothiophenylene group, benzofuranylene group, benzothiazolylene group, benzoxazolylene group, benzotriazolylene group, and thiadiazolopyridinylene group.

A divalent alicyclic hydrocarbon group as used herein is not particularly limited, and C3-30 alicyclic hydrocarbon is preferable; and specific examples thereof include cyclohexyl group, cyclohexenyl group, cyclopentenylene group, cyclopentadienylene group, cyclohexylene group, and cyclopentylene group.

A divalent aliphatic heterocyclic group as used herein is not particularly limited, and C2-30 aliphatic heterocyclic group is preferable; and specific examples thereof include divalent monocyclic aliphatic heterocyclic groups such as 3,3-oxetanediyl group, 3,3-oxolanediyl group, 3,3-oxanediyl group, 4,4-oxanediyl group, 3,3-thianediyl group, and 4,4-thianediyl group; and divalent polycyclic aliphatic heterocyclic groups such as 2,2-oxanorbornanediyl group, 2,2-azanorbornanediyl group, 2,2-thianorbornanediyl group, 3,3-norbornanelactonediyl group, 5,5-norbornanelactonediyl group, 3,3-oxanorbornanelactonediyl group, 5,5-oxanorbornanelactonediyl group, 3,3-norbornanesultonediyl group, and 5,5-norbornanesultonediyl group.

As described above, the divalent ring structure group may have a substituent group having no ring structure (a substituent group at a position other than the positions of the divalent substitutions in the divalent ring structure group). In the present invention, a substituent group having no ring is a substituent group not having any of an aromatic hydrocarbon ring, an aromatic heterocyclic ring, an alicyclic hydrocarbon ring, and an aliphatic heterocyclic ring. Examples of such a substituent group include alkoxy group, amino group, amide group, alkoxycarbonyl group, alkylcarbonyl group, alkylthio group, and halogen atoms. The ring structure of the compound (D) may have two or more substituent groups.

The bond positions (substitution positions) of the substituent groups to the ring structure are not particularly limited. The number of substitutions is preferably 0 to 3, more preferably 0 to 2, and further preferably 0 or 1.

Among them, the ring structure in the compound (D) is preferably a divalent aromatic hydrocarbon group or a divalent alicyclic hydrocarbon group. Among them, fluorenylene group, phenylene group, naphthylene group, or cyclohexyl group is preferable.

The compound (D) has a group having a reactive group. In the present invention, a group having a reactive group shall mean a group constituted of a reactive group only, or a linear or branched monovalent hydrocarbon group in which a part of hydrogen atoms is substituted with a reactive group, and which may have a heteroatom. In the present invention, a hydrocarbon group that may have a heteroatom shall mean a hydrocarbon group in which at least a part of carbon atoms and hydrogen atoms which constitute the hydrocarbon group may be substituted with a heteroatom or an atomic group having a heteroatom.

A reactive group as used herein is not particularly limited, and examples thereof include carboxy group, hydroxy group, acid anhydride group, epoxy group, isocyanate group, amide group, amino group, cyano group, imine group, sulfonic acid group, aziridine group, amine group, urea group, phosphoric acid group, cyanate group, imidazole group and oxazoline group. Among them, a group selected from the group consisting of carboxy group, hydroxy group, acid anhydride group, epoxy group, isocyanate group, amide group, amino group, cyano group, and imine group is preferable. The number of this reactive group may be one, and may be plural. The plural reactive groups may be the same as, and may be different from each other.

The group having a reactive group may have a reactive group different from that of the acrylic polymer (B), but is preferably has the same reactive group as that of the acrylic polymer (B). In other words, the group having a reactive group is preferably a group having a hydroxy group when the reactive group in the acrylic polymer (B) having a reactive

group is a hydroxy group in view of easy presence around the acrylic polymer (B).

The compound (D) is preferably represented by the following general formula (1).

[C7]

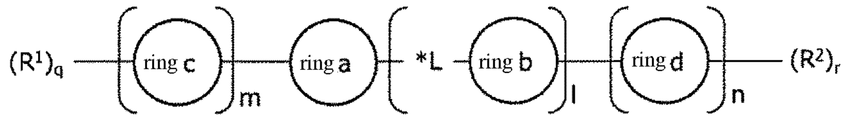

(1)

In the formula (1), the rings a, b, c and d are each independently a divalent ring structure group that may have a substituent group having no ring structure.

This divalent ring structure group is not particularly limited, and examples thereof include divalent aromatic hydrocarbon groups, divalent aromatic heterocyclic groups, divalent alicyclic hydrocarbon groups, and divalent annular aliphatic heterocyclic groups.

A divalent aromatic hydrocarbon group as used herein is not particularly limited, and C6-30 divalent aromatic hydrocarbon is preferable; and specific examples thereof include fused polycyclic aromatic hydrocarbon groups such as phenylene group, naphthylene group, indanylene group, indenylene group, fluorenylene group, anthracenylene group, azulenylene group, pyrenylene group, and perylenylene group.

A divalent aromatic heterocyclic group as used herein is not particularly limited, and C2-30 divalent aromatic heterocycle is preferable; and specific examples thereof include monocyclic aromatic heterocyclic groups such as thienylene group, furanylene group, pyridinylene group, pyrrolylene group, pyrazinylene group, thiazolylene group, oxazolylene group, and triazolylene group; and fused polycyclic aromatic heterocyclic groups such as thienothienylene group, benzothiophenylene group, benzofuranylene group, benzothiazolylene group, benzoxazolylene group, benzotriazolylene group, and thiadiazolopyridinylene group.

A divalent alicyclic hydrocarbon group as used herein is not particularly limited, and C3-30 alicyclic hydrocarbon is preferable; and specific examples thereof include cyclohexyl group, cyclohexenyl group, cyclopentenylene group, cyclopentadienylene group, cyclohexylene group, and cyclopentylene group.

A divalent aliphatic heterocyclic group as used herein is not particularly limited, and C2-30 aliphatic heterocyclic group is preferable; and specific examples thereof include divalent monocyclic aliphatic heterocyclic groups such as 3,3-oxetanediyl group, 3,3-oxolanediyl group, 3,3-oxanediyl group, 4,4-oxanediyl group, 3,3-thianediyl group, and 4,4-thianediyl group; and divalent polycyclic aliphatic heterocyclic groups such as 2,2-oxanorbornanediyl group, 2,2-azanorbornanediyl group, 2,2-thianorbornanediyl group, 3,3-norbornanelactonediyl group, 5,5-norbornanelactonediyl group, 3,3-oxanorbornanelactonediyl group, 5,5-oxanorbornanelactonediyl group, 3,3-norbornanesultonediyl group, and 5,5-norbornanesultonediyl group.

As described above, the rings a to d, which are divalent ring structure groups, may each have a substituent group having no ring structure (a substituent group at a position other than the positions of the divalent substitutions in the divalent ring structure group). In the present invention, a substituent group having no ring structure is a substituent group not having any of an aromatic hydrocarbon ring, an aromatic heterocyclic ring, an alicyclic hydrocarbon ring, and an aliphatic heterocyclic ring. Examples of such a substituent group include alkoxy group, amino group, amide group, alkoxycarbonyl group, alkylcarbonyl group, alkylthio group, and halogen atoms. The rings a to d may each have two or more substituent groups.

The bond positions (substitution positions) of the substituent groups to the rings a to d are not particularly limited. The number of substitutions is preferably 0 to 3, more preferably 0 to 2, and further preferably 0 or 1.

Among the foregoing, the rings a, b, c and d are each preferably a divalent aromatic hydrocarbon group or a divalent alicyclic hydrocarbon group. Particularly, the ring a is preferably fluorenylene group, phenylene group, or cyclohexyl group, and the rings c, b and d are each preferably phenylene group, naphthylene group, or cyclohexyl group.

In the formula (1), an example of *L is a direct bond, or a divalent group having no ring structure.

This divalent group is not particularly limited, and examples thereof is alkenylene group that may have a substituent group, -O-, -S-, -N($R^3$)-, -COOR$^4$-, and - CONR$^5$-.

This alkenylene group is not particularly limited, and is preferably linear or branched chain C1-8 alkenylene. Examples of a substituent group this alkenylene group may have include the aforementioned substituent groups the rings a to d may each have.

$R^3$ to $R^5$ are each a hydrogen atom, or an alkyl group that may have a substituent group. This alkyl group is preferably linear or branched chain C1-8 alkyl. Examples of a substituent group this alkyl group may have include the aforementioned substituent groups that rings a to d may each have.

Among the foregoing, *L is preferably a direct bond, or an alkenylene group that may have a substituent group.

In the formula (1), l means the number of the links of the groups in the parentheses, and represents 0 or 1. In the formula (1), m and n mean the number of the links of the rings c and the number of the links of the rings d, respectively, and each independently represent an integer of no less than 0. m and n may be the same as, and may be different from each other. Especially, m and n are preferably each independently no more than 3, and particularly preferably each independently no more than 1.

In the formula (1), $R^1$ and $R^2$ are each independently a group having a reactive group. In the present invention, a group having a reactive group shall mean a group constituted of a reactive group only, or a linear or branched monovalent hydrocarbon group in which a part of hydrogen atoms is substituted with a reactive group, and which may have a heteroatom. In the present invention, a hydrocarbon group that may have a heteroatom shall mean a hydrocarbon group in which at least a part of carbon atoms and hydrogen atoms which constitute the hydrocarbon group may be substituted with a heteroatom or an atomic group having a heteroatom.

A reactive group as used herein is not particularly limited, and examples thereof include carboxy group, hydroxy group, acid anhydride group, epoxy group, isocyanate group, amide group, amino group, cyano group, imine group, sulfonic acid group, aziridine group, amine group, urea group, phosphoric acid group, cyanate group, imidazole group and oxazoline group. Among them, a group selected from the group consisting of carboxy group, hydroxy group, acid anhydride group, epoxy group, isocyanate group, amide group, amino group, cyano group, and imine group is preferable. $R^1$ and $R^2$ may be the same as, and may be different from each other.

The group having a reactive group may have a reactive group different from that of the acrylic polymer (B), but is preferably has the same reactive group as that of the acrylic polymer (B). In other words, $R^1$ and $R^2$ are each preferably a group having a hydroxy group when the reactive group in the acrylic polymer (B) having a reactive group is a hydroxy group in view of easy presence around the acrylic polymer (B).

In the formula (1), q and r represent the number of the substitutions of $R^1$ and the number of the substitutions of $R^2$, respectively, and each represent an integer of no less than 1. q and r are each preferably no more than 5, more preferably no more than 3, further preferably no more than 2, and particularly preferably 1. q and r may be the same as, and may be different from each other. When q is no less than 2, at least two $R^1$'s may be the same group as, and may be different groups from each other. Likewise, when r is no less than 2, at least two $R^2$'s may be the same group as, and may be different groups from each other.

Examples of the compound (D) satisfying the formula (3) and/or encompassed in the formula (1) include the following.

BPEF: 9,9-bis[4-(2-hydroxyethoxy)phenyl]fluorene

[C8]

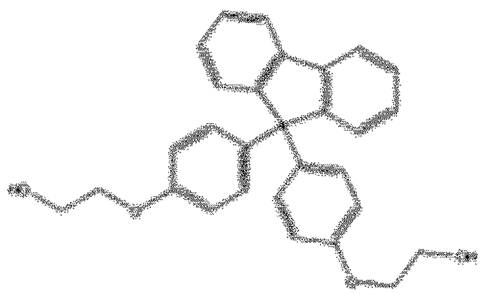

BPF: 9,9-bis(4-hydroxyphenyl)fluorene

[C9]

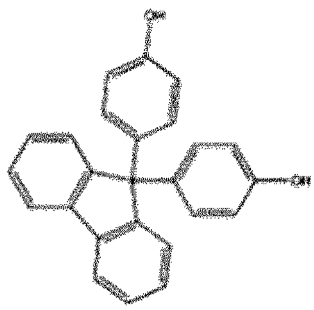

1,4-bis(2-hydroxyethoxy)benzene

[C10]

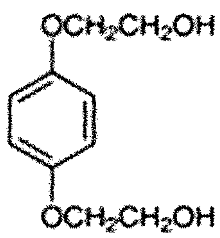

2,2-bis(4-hydroxycyclohexyl)propane

[C11]

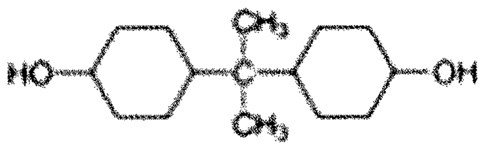

The 5% weight loss temperature of the compound (D) in an air atmosphere is preferably 300°C or higher. The use of such a compound (D) prevents its breakdown at a temperature when the resin composition is kneaded so that the fish eyes reducing effect of the compound (D) can be kept in the kneading all the time.

The content of the compound (D) is preferably 0.5 to 8.0 mass%, more preferably 1.0 to 6.0 mass%, and further preferably 1.5 to 4.0 mass% in 100 mass% of the acrylic resin composition in total.

When the content of the compound (D) is in an amount of no less than 0.5 mass%, fish eyes of the matte acrylic resin film can be reduced, which is preferable. When the content of the compound (D) is in an amount of no more than 8.0 mass%, the matte external appearance of the matte acrylic resin film does not deteriorate, which is preferable.

Particularly, the compound (D) is preferably a fluorene compound.

This fluorene compound is preferably at least one selected from the group of the compounds represented by the following general formula (2).

[C12]

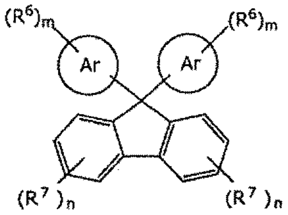

(2)

In the formula (2), the rings Ar each represent a (m+1)valent aromatic hydrocarbon ring. Preferred examples of such an aromatic hydrocarbon ring include benzene ring, and fused polycyclic aromatic hydrocarbon rings. An example of a fused polycyclic aromatic hydrocarbon ring as used herein is a fused polycyclic hydrocarbon ring having at least a benzene ring. Examples of such a fused polycyclic aromatic hydrocarbon ring include fused bicyclic hydrocarbon rings, and fused tricyclic hydrocarbon rings.

Examples of a fused bicyclic hydrocarbon ring as used herein include C8-20 fused bicyclic hydrocarbon rings such as an indene ring and a naphthalene ring, and a preferred example thereof is a C10-16 fused bicyclic hydrocarbon ring. Examples of a fused tricyclic hydrocarbon ring as used herein include an anthracene ring, and a phenanthrene ring. Among them, preferred examples of a fused polycyclic aromatic hydrocarbon ring as used herein include a naphthalene ring and an anthracene ring, and a particularly preferred example thereof is a naphthalene ring. The two rings Ar's that are the substitutions at the 9-position of fluorene may be the same as or different from each other, and is preferably the same.

In the formula (2), m's are each an integer of no less than 1, and in particular, are each preferably 1 to 5, more preferably 1 to 4, further preferably 1 to 3, and most preferably 1 or 2. The two rings Ar's may be different, but are usually the same in number of the substitutions m.

The two rings Ar's may each have a group having no reactive group other than $R^6$. For example, one Ar may have one $R^6$ (a group having a reactive group) (m = 1), and the other Ar may have a group having no reactive group (m = 0).

This group having no reactive group is not particularly limited, and an example thereof is linear or branched chain C1-6 alkyl. The two rings Ar's may have the same $R^6$, and the same group having no reactive group, and may have different $R^6$'s and different groups having no reactive group, but preferably have the same $R^6$, and the same group having no reactive group.

Among groups each having a reactive group as described above, $R^6$'s are each preferably a group having a hydroxy group as a reactive group when the polymer (B) has a hydroxy group. Preferred examples of such a group having a hydroxy group as a reactive group include hydroxy group, and groups represented by $-[O-(R^8-O)_k-H]$. $R^8$ represents an alkylene group, and k represents an integer of no less than 1. This alkylene group is not particularly limited, and examples thereof include C2-4 alkylene groups such as ethylene group, trimethylene group, propylene group, and butane-1,2-diyl group. Among them, C2 or 3 alkylene is preferable. Specifically, an ethylene group and a propylene group are preferable. In particular, k is preferably 1 to 15, more preferably 1 to 12, further preferably 1 to 8, particularly preferably 1 to 6, and most preferably 1 to 4. When k is no less than 2, the polyalkoxy group (polyalkyleneoxy group) may be constituted of the same kind of alkylene groups, and may be constituted of different kinds of alkylene groups such as an ethylene group and a propylene group in combination, but is usually constituted of the same kind of alkylene groups.

In the formula (2), n's are each an integer of no less than 0, and in particular, are each preferably 0 to 4, more preferably 0 to 3, further preferably 0 to 2, particularly preferably 0 to 1, and most preferably 0.

$R^7$'s are each preferably a linear or branched chain alkyl group. As this alkyl group, linear or branched chain C1-6 alkyl is preferable, and linear or branched chain C1-4 alkyl is further preferable. Examples of such an alkyl group include methyl group, ethyl group, and propyl group. Among them, methyl group is preferable. $R^7$'s may be different from and may be the same as each other. When n in one benzene ring is no less than 2, $R^7$'s in the same benzene ring may be different, and may be the same. The bond positions (substitution positions) of $R^7$'s to the benzene rings constituting the fluorene skeleton are not particularly limited. The two benzene rings constituting fluorene may be different, but are usually the same in number of the substitutions n.

Specific examples of fluorene compounds represented by the general formula (2) include 9,9-bis(hydroxyaryl)fluorenes or derivatives thereof. These 9,9-bis(hydroxyaryl)fluorenes include 9,9-bis(monohydroxyaryl)fluorenes.

Examples of these 9,9-bis(monohydroxyaryl)fluorenes include 9,9-bis(hydroxy C6-10 aryl)fluorenes such as 9,9-bis(4-hydroxyphenyl)fluorene (bisphenolfluorene, BPF), and 9,9-bis(6-hydroxy-2-naphthyl)fluorene (BNF). Examples of a 9,9-bis(hydroxyaryl)fluorene having a substituent group as used herein include 9,9-bis(alkyl-hydroxyaryl)fluorene [9,9-bis(C1-4 alkyl-hydroxy C6-10 aryl)fluorenes such as 9,9-bis(4-hydroxy-3-methylphenyl)fluorene (biscresolfluorene, BCF), and 9,9-bis(4-hydroxy-3-ethylphenyl)fluorene, 9,9-bis(6-hydroxy-5-methyl-2-naphthyl)fluorene; and 9,9-bis(diC1-4 alkyl-hydroxy C6-10 aryl)fluorenes such as 9,9-bis(4-hydroxy-3,5-dimethylphenyl)fluorene]. Examples of a 9,9-bis(cycloalkyl-hydroxyaryl)fluorene as used herein include 9,9-bis(C5-8 cycloalkyl-hydroxy C6-10 aryl)fluorenes such as 9,9-bis(4-hydroxy-3-cyclohexyl phenyl)fluorene. Examples of a 9,9-bis(aryl-hydroxyaryl)fluorene as used herein include 9,9-bis(C6-8 aryl-hydroxy C6-10 aryl)fluorenes such as 9,9-bis(4-hydroxy-3-phenylphenyl)fluorene. Examples of a 9,9-bis(aralkyl-hydroxyaryl)fluorene as used herein include 9,9-bis(C6-8 aryl C1-2 alkyl-hydroxy C6-10 aryl)fluorenes such as 9,9-bis(4-hydroxy-benzylphenyl)fluorene.

Examples of derivatives of 9,9-bis(hydroxyaryl)fluorenes as used herein include alkylene oxide adducts of 9,9-bis(hydroxyaryl)fluorenes.

(Alkylene Oxide Adduct)

An example of an alkylene oxide adduct of a 9,9-bis(hydroxyaryl)fluorene as used herein is a compound such that an alkylene oxide (C2-4 alkylene oxide, particularly C2-3 alkylene oxide) is added to any of the aforementioned bis(mono or dihydroxyaryl)fluorenes. The addition number of the alkylene oxide units (k in the formula (2)) is the same as the foregoing (for example, approximately, 1 to 12, preferably 1 to 8, further preferably 1 to 6, and particularly 1 to 4), but is not particularly limited. Examples of such compounds where k is 1 are as follows.

Examples of such an alkylene oxide adduct include: 9,9-bis(hydroxyalkoxyaryl)fluorenes [such as 9,9-bis[(hydroxy C2-4 alkoxy)-C6-10 aryl]fluorenes including 9,9-bis[4-(2-hydroxyethoxy)-phenyl]fluorene (bisphenoxyethanol fluorene, BPEF), and 9,9-bis[6-(2-hydroxyethoxy)-2-naphthyl]fluorene]; and 9,9-bis(hydroxyalkoxyaryl)fluorenes each having a substituent group {such as 9,9-bis(hydroxy C2-4 alkoxy-C1-4 alkyl C6-10 aryl)fluorenes including 9,9-bis[4-(2-hydroxyethoxy)-3-methylphenyl]fluorene (biscresolethanol fluorene, BCEF); and 9,9-bis(hydroxy C2-4 alkoxy-diC1-4 alkyl C6-10 aryl)fluorenes including 9,9-bis[(2-hydroxyethoxy)-3,5-dimethylphenyl]fluorene}.

The content of the fluorene compound represented by the formula (2) is preferably 0.5 to 8.0 mass%, more preferably 1.0 to 6.0 mass%, and further preferably 1.5 to 4.0 mass% in 100 mass% of the acrylic resin composition in total.

When the content of the fluorene compound is in an amount of no less than 0.5 mass%, fish eyes of the matte acrylic resin film can be reduced, which is preferable. When the content of the fluorene compound is in an amount of no more than 8.0 mass%, the matte external appearance of the matte acrylic resin film does not deteriorate, which is preferable.

(Additives)

The acrylic resin composition having matting properties of the present invention may comprise additives such as a stabilizer, a lubricant, a processing aid, a plasticizer, an impact resistance aid, a foaming agent, a filler, an antibacterial agent, an antifungal agent, a release agent, an antistatic agent, a colorant, an ultraviolet absorber, a light stabilizer, and an antioxidant as necessary.

In particular, when the matte acrylic resin film (or acrylic resin composition) of the present invention is used as a protective layer of a base material, an ultraviolet absorber and/or a light stabilizer is preferably contained in the acrylic resin composition for giving weatherability. Further, an antioxidant is preferably contained for suppressing thermolysis of the ultraviolet absorber and/or the light stabilizer.

(Ultraviolet Absorber)

Any known ultraviolet absorber can be used. A copolymer type ultraviolet absorber may be used. The molecular weight of the used ultraviolet absorber is preferably no less than 300, and more preferably no less than 400. The use of an ultraviolet absorber having a molecular weight of no less than 300 can prevent, for example, a mold from fouling due to volatilization of the ultraviolet absorber when vacuum molding or pressure molding is performed in an injection mold. In general, an ultraviolet absorber having a higher molecular weight less likely leads to a long-term bleed-out after processed into a film, and its ultraviolet absorbing performance is kept for a longer period of time than that having a lower molecular weight.

Further, when an ultraviolet absorber has a molecular weight of no less than 300, the volatilization amount thereof while the matte acrylic resin film is extruded from a T-die and cooled by cooling roll is small. Therefore, the amount of the remaining ultraviolet absorber is sufficient, and thus, good performance is exerted. Further, the following problem hardly arises: a volatilized ultraviolet absorber is recrystallized on a chain above a T-die which the T-die is hung on, and on an exhaust hood to be grown over time, and then, the recrystallized ultraviolet absorber eventually falls on the film to lead to blemishes on the external appearance.

An ultraviolet absorber as used herein is not particularly limited. A benzotriazole-based or triazine-based ultraviolet absorber having a molecular weight of no less than 400 can be particularly preferably used. Specific examples of

a benzotriazole-based ultraviolet absorber having a molecular weight of no less than 400 as used herein include ADK STAB LA-24 and ADK STAB LA-31RG (all trade names) manufactured by ADEKA Corporation, and Tinuvin 234 and Tinuvin 360 (all trade names) manufactured by BASF Japan Ltd. Specific examples of a triazine-based ultraviolet absorber having a molecular weight of no less than 400 as used herein include ADK STAB LA-46 and ADK STAB LA-F70 (all trade names) manufactured by ADEKA Corporation, and Tinuvin 1577ED and Tinuvin 1600 (all trade names) manufactured by BASF Japan Ltd.

ADK STAB LA-31RG can be preferably used in view of long-term thermal stability of the ultraviolet absorber itself.

The adding amount of the ultraviolet absorber preferably ranges from 0.1 to 10 parts by mass to 100 parts by mass of the resins constituting the acrylic resin composition. This adding amount is more preferably no less than 0.5 parts by mass, and further preferably no less than 1 part by mass in view of improving weatherability while more preferably no more than 5 parts by mass, and further preferably no more than 3 parts by mass in view of suppressing dirt in the steps in the film formation, and the transparency of the formed body.

(Light Stabilizer)

Any known light stabilizer can be used. Particularly, a radical scavenger such as hindered amine light stabilizers is preferable.

For example, the following compounds can be used: tetrakis(1,2,2,6,6-pentamethyl-4-piperidyl) butane-1,2,3,4-tetracarboxylate (Cas No.: 91788-83-9, molecular weight: 847, product example: ADK STAB LA-52 manufactured by ADEKA Corporation), tetrakis(2,2,6,6-tetramethyl-4-piperidyl) butane-1,2,3,4-tetracarboxylate (Cas No.: 64022-61-3, molecular weight: 791, product examples: ADK STAB LA-57 and ADK STAB LA-57G manufactured by ADEKA Corporation), 1,2,3,4-butanetetracarboxylic acid, tetramethyl ester, reaction products with 1,2,2,6,6-pentamethyl-4-piperidinol and β,β,β',β'-tetramethyl-2,4,8,10-tetraoxaspiro[5.5]undecane-3,9-diethanol (Cas No.: 101357-36-2, 85631-00-1, product example: ADK STAB LA-63P manufactured by ADEKA Corporation), 1,2,3,4-butanetetracarboxylic acid, tetramethyl ester, reaction products with 2,2,6,6-tetramethyl-4-piperidinol and β,β,β',β'-tetramethyl-2,4,8,10-tetraoxaspiro[5.5]undecane-3,9-diethanol (Cas No.: 101357-37-3, 85631-01-2, product example: ADK STAB LA-68 manufactured by ADEKA Corporation), bis(1,2,2,6,6-pentamethyl-4-piperidyl) sebacate (Cas No.: 41556-26-7, product example: ADK STAB LA-72 manufactured by ADEKA Corporation), bis(2,2,6,6-tetramethyl-4-piperidyl) sebacate (Cas No.: 52829-07-9, molecular weight: 481, product examples: ADK STAB LA-77Y and ADK STAB LA-77G manufactured by ADEKA Corporation), bis(1-undecanoxy-2,2,6,6-tetramethylpiperidine-4-yl)carbonate (Cas No.: 705257-84-7, molecular weight: 681, product example: ADK STAB LA-81 manufactured by ADEKA Corporation), 1,6-hexanediamine, N, N'-bis(2,2,6,6-tetramethyl-4-piperidinyl)-, polymer with 2,4,6-trichloro-1,3,5-triazine, reaction products with 2,4,4,-trimethyl-2-pentanamine (Cas No.: 70624-18-9, molecular weight: 2,000 to 3,000, product example: ADK STAB LA-94G manufactured by ADEKA Corporation), and N,N'-bis(2,2,6,6-tetramethyl-4-piperidinyl)-1,6-hexanediamine polymer with 2,4,6-trichloro-1,3,5-triazine reaction products with N-butyl-l-butanamine and N-butyl-2,2,6,6-tetramethyl-4-piperidinamine; 1,6-hexanediamine, N,N-bis(2,2,6,6-tetramethyl-4-piperidinyl)-, polymer with 2,4,6-trichloro-1,3,5-triazine, reaction products with, N-butyl-l-butanamine and N-butyl-2,2,6,6-tetramethyl-4-piperidinamine; 1,6-hexanediamine, N1,N6-bis(2,2,6,6-tetramethyl-4-piperidinyl)-, polymer with 2,4,6-trichloro-1,3,5-triazine, reaction products with, N-butyl-l-butanamine and N-butyl-2,2,6,6-tetramethyl-4-piperidinamine (Cas No: 192268-64-7, molecular weight: 2600 to 3400, product example: Chimassorb 2020 FDL manufactured by BASF), and poly[[6-[(1,1,3,3-tetramethylbutyl)amino]-s-triazine-2,4-diyl]-[(2,2,6,6-tetramethyl-4-piperidyl)imino]-hexamethylene-[(2,2,6,6-tetramethyl-4-piperidyl)imino]] (Cas No.: 71878-19-8, molecular weight: 2000 to 3100, product example: Chimassorb 944 FDL manufactured by BASF).

ADK STAB LA-57 or ADK STAB LA-57G can be preferably used in view of reducing fish eyes of the matte acrylic resin film to be obtained by forming the acrylic resin composition having matting properties. Chimassorb 2020 FDL can be preferably used in view of reducing fish eyes, long-term thermal stability, and preventing bleeding. The molecular weight of the light stabilizer is preferably no less than 1000, more preferably no less than 1500, and further preferably no less than 2000 in view of long-term thermal stability.

The adding amount of the light stabilizer preferably ranges from 0.1 to 2 parts by mass to 100 parts by mass of the resins constituting the acrylic resin composition. This adding amount is more preferably no less than 0.2 parts by mass in view of weatherability of the acrylic resin composition, while more preferably no more than 1 part by mass, and further preferably no more than 0.5 parts by mass in view of the MFR retention of the acrylic resin composition (M2/M1). The light stabilizer of no less than 0.1 parts by mass in an adding amount can improve the weatherability of the matte acrylic resin film. The light stabilizer of no more than 2 parts by mass in an adding amount can lead to increased thermal stability in forming to suppress the rise in the melt viscosity due to thermal degradation of the resin at a much lower level, and can reduce the retention in a forming machine to suppress the thermal degradation of the resin, which is preferable. On the film to be obtained, any defects such as a time-course increase of blemishes called fish eyes which are caused by thermally-degraded products are hardly produced so that melt extrusion including film formation can be performed for a long time.

(Antioxidant)

Any known antioxidant can be used without any particular limitations. A phenolic antioxidant or a phosphoric antioxidant is preferable.

A phenolic antioxidant as used herein is not particularly limited, and may be a known phenolic antioxidant that is a compound having a phenolic hydroxyl group.

Examples of such a phenolic antioxidant include: ADK STAB AO-20, ADK STAB AO-30, ADK STAB AO-40, ADK STAB AO-50, ADK STAB AO-60, ADK STAB AO-80, and ADK STAB AO-330 (all trade names) manufactured by ADEKA Corporation; and Irganox 1010, Irganox 1035, Irganox 1076, Irganox 1098, Irganox 1135, Irganox 1330, Irganox 1425WL, Irganox 1520L, Irganox 245, Irganox 259, Irganox 3114, and Irganox 565 (all trade names) manufactured by BASF Japan Ltd. One phenolic antioxidant may be used alone, two or more phenolic antioxidants may be used in combination, and any other antioxidant may be also used in combination.

ADK STAB AO-60 or Irganox 1010 can be preferably used in view of long-term thermal stability of the acrylic resin composition.

The adding amount of the phenolic antioxidant preferably ranges from 0.2 to 10 parts by mass to 100 parts by mass of the resins constituting the acrylic resin composition. This adding amount is more preferably no less than 0.4 parts by mass, and further preferably no less than 0.6 parts by mass in view of thermal stability in forming and weatherability, while more preferably no more than 5 parts by mass, and further preferably no more than 3 parts by mass in view of suppressing dirt in the steps in the film formation, and transparency of the formed body.

A phosphoric antioxidant as used herein is not particularly limited. A phosphoric antioxidant having C8 or more alkyl is preferable. A phosphoric antioxidant having C8 or more alkyl as used herein is not particularly limited, and may be a known phosphoric antioxidant that is a phosphite compound having C8 or more alkyl. Having a phosphoric antioxidant having C8 or more alkyl can improve the matte external appearance of the matte acrylic resin film.

Examples of such a phosphoric antioxidant having C8 or more alkyl include triisodecyl phosphite (Cas No.: 25448-25-3, molecular weight: 503, product example: ADK STAB 3010 manufactured by ADEKA Corporation), phosphorous acid tris(2-ethylhexyl) ester (Cas No.: 301-13-3, molecular weight: 418, product examples: JP-308E and JPE-308E manufactured by Johoku Chemical Co., Ltd.), triisodecyl phosphite (Cas No.: 25448-25-3, molecular weight: 502, product example: JP-310 manufactured by Johoku Chemical Co., Ltd.), trilauryl phosphite (Cas No.: 3076-63-9, molecular weight: 587, product example: JP-312L manufactured by Johoku Chemical Co., Ltd.), triisotridecyl phosphite (Cas No.: 77745-66-5, molecular weight: 629, product example: JP-333E manufactured by Johoku Chemical Co., Ltd.), trioctadec-9-en-1-yl phosphite (Cas No.: 13023-13-7, molecular weight: 833, product example: JP-318-O manufactured by Johoku Chemical Co., Ltd.), and trioctadecyl phosphite (Cas No.: 2082-80-6, molecular weight: 839, product example: JP-318E manufactured by Johoku Chemical Co., Ltd.). One phosphoric antioxidant may be used alone, two or more phosphoric antioxidants may be used in combination, and any other antioxidant may be also used in combination.

The adding amount of the phosphoric antioxidant having C8 or more alkyl is preferably 0.45 to 2.00 mass%, more preferably 0.50 to 1.60 mass%, and further preferably 0.60 to 1.20 mass% of the acrylic resin composition.

The phosphoric antioxidant having C8 or more alkyl of no less than 0.45 mass% in an adding amount can improve the matte external appearance and the MFR retention (M2/M1) of the acrylic resin composition. In more detail, in the compounding step of producing the acrylic resin composition, the phosphoric antioxidant having C8 or more alkyl promotes the crosslinking reaction of the acrylic polymer (B) having a reactive group, and thereby, improves the matte external appearance of a face using the acrylic resin composition and having matting properties. The promotion of the crosslinking reaction of the acrylic polymer (B) having a reactive group in the compounding step can lead to a good MFR retention (M2/M1) of the acrylic resin composition to prevent the fluidity from lowering due to the progress of the crosslinking reaction in the subsequent steps.

The phosphoric antioxidant having C8 or more alkyl of no more than 2.00 mass% in an adding amount can improve the matte external appearance of the matte acrylic resin film using the acrylic resin composition. In more detail, in the compounding step of producing the acrylic resin composition, the viscosity of the molten resin is in a proper range, and thus, the degree of the dispersion of the acrylic polymer (B) having a reactive group becomes better to improve the matte external appearance of the matte acrylic resin film using the acrylic resin composition.

<Properties of Acrylic Resin Composition Having Matting Properties>

(MFR Retention)

The MFR retention (M2/M1) of the acrylic resin composition is calculated as the ratio of the melt flow rate (M2) for 20 minutes in retention time which is measured under the conditions that the temperature is 240°C and the load is 49 N conforming to JIS K7210 (method A) to the melt flow rate (M1) for 4 minutes in retention time which is measured under the conditions that the temperature is 240°C, and the load is 49 N conforming to JIS K7210 (method A). The MFR

retention (M2/M1) preferably ranges from 0.85 to 1.15, and more preferably ranges from 0.9 to 1.1.

When this MFR retention (M2/M1) is no less than 0.85, the thermal stability in forming is increased more, which can suppress the rise in melt viscosity due to the thermal degradation of the resin in a lower level, and can reduce the retention in a forming machine more to suppress the thermal degradation of the resin, which is preferable. When the formed body to be obtained is a film, any defects such as a time-course increase of blemishes called fish eyes which are caused by thermally-degraded products are hardly produced so that melt extrusion including film formation can be performed for a long time.

When this MFR retention (M2/M1) is no more than 1.15, the thermal stability in forming is increased more, which can suppress the thermolysis of the resin in a lower level, and can suppress the thermal degradation of the resin due to a side reaction, which is preferable. When the formed body to be obtained is a film, any defects such as a time-course increase of blemishes called fish eyes which are caused by thermally-degraded products are hardly produced so that melt extrusion including film formation can be performed for a long time.

The range of the melt flow rate (M1) of the acrylic resin composition is preferably 1.0 to 10.0 g/10min, more preferably 1.5 to 7.0 g/10min, and further preferably 2.0 to 6.0 g/10min.

When this melt flow rate (M1) is no less than 1.0 g/10min, the retention of the resin in a forming machine can be reduced more in forming because the melt viscosity is low, which is preferable. When the melt flow rate (M1) is no more than 10.0 g/10min, the melt viscosity is not too low, which leads to improved film forming stability when the acrylic resin composition is formed, which is preferable.

<Method for Producing Acrylic Resin Composition Having Matting Properties>

The acrylic resin composition can be produced by a known method such as the methods of single-screw kneading, co-rotating twin-screw kneading, and counter-rotating twin-screw kneading which are general compounding and use extruders. Any method bringing about a powerful kneading effect such as twin-screw kneading is preferable.

Examples of a preferred twin-screw extruder include TEM series manufactured by Toshiba Machine Co., Ltd. For example, the structure of the screw includes a conveying part with which the acrylic resin composition is conveyed, and a kneading part for kneading the acrylic resin composition, such as a kneading zone, and a screw segment where molten materials are fed in opposite directions (a screw segment spirally wound in opposite directions).

Preferably, an extruder as used herein has a vent from which the moisture in the acrylic resin composition, which is a raw material, and the volatile gas generated from the molten and kneaded melt materials can be degassed. A decompressive pump such as a vacuum pump is preferably disposed at the vent. Such disposing leads to efficient discharge of the generated moisture and volatile gas to the outside of the extruder. It is also possible to install, into a zone before a die portion of the extruder, a screen for removing foreign matters etc. contaminated in the raw material for the extrusion to remove these foreign matters from the acrylic resin composition. Examples of such a screen include a filter pack, a screen changer, and leaf disc-type and pleated polymer filters which use a wire mesh, a sintered metal nonwoven fabric, and the like.

A further example of a method bringing about a powerful kneading effect is the method of increasing the screw rotation number as many as possible, and reducing the feeding amount of the acrylic resin composition. Shear heating easily occurs to the acrylic resin composition molten and extruded like this, and thus, its temperature at a head portion tends to be higher. The melt materials molten and kneaded in the extruder are extruded as a strand from a die with a nozzle of approximately 3 to 5 mm in diameter which is displaced at the head portion, and cut by the method of cold cutting, hot cutting, or the like to be pelletized.

<Matte Acrylic Resin Film>

The resin composition of the present invention is preferably for matte films. The matte acrylic film of the present invention can be produced by forming the acrylic resin composition having matting properties of the present invention. The matte acrylic film of the present invention is excellent in matting properties and thermal stability. Further, the obtained film has the feature of extremely few blemishes on the external appearance since fish eyes caused when the film is produced can be reduced.

(Surface Glossiness at 60°)

At least one side of the matte acrylic resin film of the present invention preferably has a surface glossiness at 60° (Gs 60°) of less than 100%. In the present invention, a face having a Gs 60° of less than 100% is referred to as "a face having matting properties"; and a face having a Gs 60° of no less than 100% is referred to as "a face having no matting properties".

When the matte acrylic resin film is a single-layer film, at least one side of the film is the face having matting

properties.

The lower limit of this Gs 60° is preferably no less than 1%. This Gs 60° is preferably no less than 5% and less than 70%, more preferably no less than 6% and less than 40%, and particularly preferably no less than 7% and less than 30%.

When the face having matting properties has a Gs 60° of no less than 1% and less than 100%, the obtained matte acrylic resin film has matting properties, and is excellent in design qualities and decorativeness including luxuriousness and depth.

When this Gs 60° is less than 70%, the influence of the processing conditions and film forming conditions is restrained, and the stability of the matte external appearance is excellent. When this Gs 60° is no less than 5%, it is not necessary to add a large amount of a matting agent, the fluidity does not extremely deteriorate, and the long-run performance becomes better. Such a Gs 60° is also preferable in view of economy. The surface glossiness of the film is the value measured conforming to JIS Z8741.

(Arithmetic Mean Roughness Ra)

The arithmetic mean roughness (Ra) of the film is preferably no less than 0.05, more preferably no less than 0.10, and further preferably no less than 0.15 while preferably no more than 0.80, more preferably no more than 0.70, further preferably no more than 0.55, and particularly preferably no more than 0.50. When this Ra is no less than 0.05, the glare is reduced, and design qualities and decorativeness including luxuriousness and depth are excellent. When this Ra is no more than 0.06, a matte texture is fine, and the external appearance is excellent in design qualities. The arithmetic mean roughness (Ra) is the value measured conforming to JIS B0601-2001.

(Mean Width of Profile Elements Rsm)

The mean width of the profile elements (Rsm) of the film is preferably no less than 30, more preferably no less than 35, and further preferably no less than 40; and preferably no more than 90, more preferably no more than 85, and further preferably no more than 80. When this Rsm is no less than 30, the glare is reduced, and design qualities and decorativeness including luxuriousness and depth are excellent. When this Rsm is no more than 90, a matte texture is fine, and the external appearance is excellent in design qualities. The mean width of the profile elements (Rsm) is the value measured conforming to JIS B0601-2001.

(Transparency)

As the luminous transmittance of the film, the total luminous transmittance measured conforming to JIS K7361-1 is preferably no less than 80%, more preferably no less than 85%, and further preferably no less than 90%. When this total luminous transmittance is no less than 80%, a decorated layer printed on the film is finely visible when viewed from the side of the film where no decorated layer is printed.

The haze of the film is not particularly limited as long as the total luminous transmittance is no less than 80%. In view of a beautiful external appearance as the matte film, this haze is preferably no more than 95%, more preferably no more than 90%, and further preferably no more than 85%. The haze of the film is the value measured conforming to JIS K7136.

(Number of Fish Eyes)

As the number of fish eyes of the film, the number of fish eyes each having a size of no less than 0.001 $mm^2$ on the film having a thickness of 40 μm is preferably less than 500/0.5 $m^2$, more preferably less than 450/0.5 $m^2$, and further preferably no more than 400/0.5 $m^2$ in view of design qualities of the external appearance. When the number of such fish eyes is less than 500/0.5 $m^2$, the external appearance of the film is less poor, lamination properties and printability in processing become better, and a product loss becomes less. The smaller the number of such fish eyes, the better. The lower limit of this number is preferably no less than 0/0.5 $m^2$, and most preferably 0/0. 5 $m^2$.

(Thickness of Film)

The thickness of the film is preferably no less than 1 μm, and more preferably no less than 5 μm because the handleability and lamination properties of the film become better; and is preferably no more than 500 μm, and more preferably no more than 300 μm because the film formability and the processability when the film is formed become better.

<Matte Acrylic Resin Laminate Film, and Laminate>

The laminate film of the present invention has a laminated structure including a matte acrylic resin layer comprising the acrylic resin composition having matting properties, and a transparent acrylic resin layer. The laminate film may be produced by laminating the aforementioned single-layer matte acrylic resin film, and a transparent acrylic resin film (transparent acrylic resin layer), and may be produced by subjecting the acrylic resin composition having matting properties, and a composition to form the transparent acrylic resin layer to coextrusion.

The laminate film is a matte acrylic resin film formed by laminating a transparent acrylic resin layer comprising a non-laminated face that is a face having no matting properties on a matte acrylic resin layer formed by a matte acrylic resin film comprising a non-laminated face having matting properties.

The face having matting properties can be formed using the above-described acrylic resin composition having matting properties. The transparent acrylic resin layer can be formed using a transparent acrylic resin composition that exerts no matting properties which will be described later.

The surface glossiness at 60° (Gs 60°) of the face having no matting properties is no less than 100%, preferably no less than 120%, and more preferably no less than 140%.

When the face having no matting properties has a surface glossiness at 60° (Gs 60°) of no less than 100%, printability and lamination properties are improved. That is, the non-laminated face of the transparent acrylic resin layer in the laminate film is excellent in smoothness, and thus, can extremely reduce unprinted portions. Further, when the laminate film after printing is applied thereto is laminated on a base material to form a laminate, the face of the transparent acrylic resin layer, which is excellent in smoothness, can be laminated so as to come into contact with a base material, which leads to excellent lamination properties.

The ratio of the matte acrylic resin layer and the transparent acrylic resin layer in layer thickness in the laminate film is not particularly limited. In view of the transparency, matte external appearance, and printability of the matte acrylic resin laminate film, this ratio is preferably 1/99 to 99/1, and more preferably 50/50 to 10/90 (matte acrylic resin layer/transparent acrylic resin layer).

(Transparent Acrylic Resin Composition)

The transparent acrylic resin composition constituting the transparent acrylic resin layer in the matte acrylic resin laminate film is not particularly limited as long as not exerting matting properties, and as long as being a composition containing an acrylic resin as the major component.

Examples of the transparent acrylic resin composition include acrylic resin compositions not containing any component shown as the examples of the matting component (matting agent) in the acrylic resin composition having matting properties. As a preferred example, an acrylic resin composition comprising the acrylic rubber-containing polymer (A), the acrylic polymer (C) having no reactive group, and an ultraviolet absorber, a light stabilizer, an antioxidant, various additives, etc. which can be used for the aforementioned acrylic resin composition having matting properties excluding the acrylic polymer (B) having a reactive group, which is a component exerting matting properties (matting agent), can be preferably used.

(Base Material)

Examples of the base material when the matte acrylic resin laminate film of the present invention is laminated on the base material as the transparent acrylic resin layer faces the base material to form the laminate include resins, wood veneers, plywoods, particle boards, wood boards such as medium-density fiberboards (MDFs), aqueous boards such as wood fiberboards, and metals such as iron and aluminum.

Examples of a resin as used herein include polyolefin resins such as polyethylene, polypropylene, polybutene, polymethylpentene, ethylene-propylene copolymers, ethylene-propylene-butene copolymers, and olefinic thermoplastic elastomers; general-purpose thermoplastic or thermosetting resins such as polystyrene resins, ABS resins, AS resins, acrylic resins, urethane resins, unsaturated polyester resins, and epoxy resins; general-purpose engineering resins such as polyphenylene oxide and polystyrene-based resins, polycarbonate resins, polyacetal, polycarbonate-modified polyphenylene ethers, and polyethylene terephthalate; super engineering resins such as polysulfone, polyphenylene sulfide, polyphenylene oxide, polyetherimide, polyimide, liquid crystal polyester, polyallyl-based high-temperature resins; reinforcing materials such as glass fibers and inorganic fillers (including talc, calcium carbonate, silica, and mica); and composite resins and various modified resins to which modifiers of rubber components etc. are added.

<Method of Producing Laminate Film>

The matte acrylic resin film can be produced by a known method such as the methods of melt casting, extrusion

molding with a T-die, and inflation. In view of economy, the method of extrusion molding with a T-die is preferable. The matte acrylic resin laminate film can be formed by co-extruding the matte acrylic resin layer formed using the acrylic resin composition having matting properties, and the transparent acrylic resin layer formed using the transparent acrylic resin composition through, for example, the method of extrusion-molding several layers with a T-die.

When the film is molded by a method of extrusion molding with a T-die which comprises holding between plural rolls or belts that are selected from metal rolls, nonmetal rolls, and metal belts to form the film, the surface smoothness of the obtained film can be improved to reduce unprinted portions when printing is performed on the film. Examples of a metal roll as used herein include the metallic mirror touch roll disclosed in JP 2808251 B2, and the roll that comprises a metal sleeve (metal thin film pipe) and a forming roll, is used in a sleeve-touch system, and is disclosed in WO 97/28950 A1. An example of a nonmetal roll as used herein is a touch roll formed from a silicone rubber or the like. Further, an example of a metal belt as used herein is a metal endless belt. These metal rolls, nonmetal rolls and metal belts may be used in combination.

In the aforementioned method of holding between plural rolls or belts that are selected from metal rolls, nonmetal rolls, and metal belts to form the film, preferably, the melt-extruded acrylic resin composition that can exert matting properties is held in a state where there is substantially no bank (resin reservoir), and is plane-transferred without being substantially rolled, to form the film. When the film is formed without formation of such a bank (resin reservoir), the acrylic resin composition, which can exert matting properties, in a cooling step is plane-transferred without being rolled. Thus, the film formed by this method can have a lowered heat shrinkage.

When melt extrusion is performed by, for example, the method of extrusion molding with a T-die, one may install, into a zone before a T-die portion of an extruder, a screen for removing foreign matters etc. contaminated in the raw material for the extrusion to remove these foreign matters from the acrylic resin composition that can exert matting properties. Examples of such a screen include a filter pack, a screen changer, and leaf disc-type and pleated polymer filters which use a wire mesh, a sintered metal nonwoven fabric, etc.

The thickness of the laminate film is preferably no more than 300 $\mu$m, and further preferably no more than 200 $\mu$m; and preferably no less than 15 $\mu$m, and further preferably no less than 40 $\mu$m. When this thickness is no less than 15 $\mu$m, a sufficient depth is obtained on the external appearance of the formed product, which is preferable. In addition, in particular, in the case of formation into a complex shape, a sufficient thickness is obtained by drawing. When this thickness is no more than 300 $\mu$m, appropriate rigidity is given, which leads to a tendency of improving lamination properties, fabricability, etc., which is preferable. In addition, an economic advantage is brought in terms of mass per unit area. Furthermore, film formability becomes stable to facilitate the production of the film.

The matte acrylic resin film can be surface-treated for imparting various functions if necessary. Examples of such surface treatment include: printing such as silk printing, and ink-jet printing; metal deposition for giving a metal tone or antireflection; sputtering; wet plating; surface hardening for improving surface hardness; water repellent or photocatalyst layer formation for preventing dirt; antistatic treatment for preventing dust adhesion or blocking electromagnetic waves; antireflection layer formation; and antiglare treatment.

When printing among these treatments is performed, preferably, one-sided printing is performed on the film. Particularly, under-printing of laying a printing surface on the adhesive face to the base material resin is particularly preferable in view of protecting the printing surface, and imparting luxuriousness.

<Method of Producing Laminate>

The laminate of the present invention can be produced by laminating the laminate film on a base material as the transparent acrylic resin layer of the laminate film faces the base material.

When laminated on a base material of a thin thickness and a substantially two-dimensional shape, the laminate film can be laminated by a known method such as thermal lamination when the base material is thermally fusible, or by the use of an adhesive, or coating the transparent acrylic resin layer of the laminate film with an adhesive when the base material is not thermally fusible.

The laminate film can be laminated on a base material of a three-dimensional shape by a known forming method such as: the methods of insert molding of inserting the laminate film, the shape of which is processed in advance, into an injection molding die; and in-molding of performing injection molding after vacuum molding in a mold. Among them, the method of in-molding is preferable. In the method of in-molding, the laminate film is molded into a three-dimensional shape by vacuum molding, and thereafter, the base material resin is poured into the molded product to unite them into one body by injection molding. Thus, the formed product having the laminate film on the outermost layer thereof can be easily obtained. Further, the molding of the film and injection molding can be performed in one step, and thus, workability and economic efficiency are excellent.

Preferably, the heating temperature in the method of in-molding is no less than the temperature at which the laminate film starts to soften and is usually 70 to 170°C. When this temperature is lower than 70°C, molding may become difficult. When this temperature is higher than 170°C, the external appearance of the surface becomes worse, and

releasability becomes worse.

Such a laminate is excellent in external appearance, weatherability, transparency, printability, water-whitening resistance, etc., and thus, is very useful as a protective film particularly for parts for wet areas such as a bathroom and a kitchen, and components for outdoor building materials such as siding materials, and has a high industrial value. This laminate may be also used for anything other than a protective film for parts and sidings for wet areas such as a bathroom and a kitchen, and components for exterior building materials such as siding materials.

[Examples]

Hereinafter, the present invention will be further described with reference to examples and comparative examples. In the following description, "parts" and "%" relating to amounts and ratios mean "parts by mass" and "mass%", respectively, and abbreviations represent names of compounds in table 1.

First, the evaluation method, and the production examples of the acrylic rubber-containing polymer (A) and the acrylic polymer (B) having a reactive group will be described.

Table 1

(Table 1)

| Abbreviation | Name of compound |
|---|---|
| MMA | methyl methacrylate |
| n-BA | n-butyl acrylate |
| BDMA | 1,3-butylene glycol dimethacrylate |
| AMA | allyl methacrylate |
| MA | methyl acrylate |
| HEMA | 2-hydroxyethyl methacrylate |
| St | styrene |
| LPO | lauryl peroxide |
| CHP | cumene hydroperoxide |
| tBH | t-butyl hydroperoxide |
| RS610 | mono-n-dodecyloxytetraoxyethylene sodium phosphate (Phosphanol RS-610NA manufactured by TOHO Chemical Industry Co., Ltd.) |
| OTP | di-2-ethylhexyl sulfosuccinate sodium salt (PELEX OT-P manufactured by Kao Corporation) |
| n-OM | n-octal mercaptan |
| EDTA | ethylenediaminetetraacetic acid disodium salt |
| SFS | sodium formaldehyde sulfoxylate |
| BPEF | 9,9-bis[4-(2-hydroxyethoxy)phenyl]fluorene (bisphenoxyethanol fluorene) |
| BPF | 9,9-bis(4-hydroxyphenyl)fluorene (bisphenolfluorene) |
| PEG20000 | polyethylene glycol |
| MS-6 | bis(12-hydroxystearic acid)magnesium salt |

<Evaluation Method>

(Mean Particle Diameter of Acrylic Polymer Having Reactive Group (B))

The mass mean particle diameter of the acrylic polymer (B) having a reactive group was measured with a laser diffraction and scattering particle size distribution analyzer LA-910 manufactured by HORIBA, LTD.

(Intrinsic Viscosity of Acrylic Polymer Having Reactive Group (B))

The intrinsic viscosity of the acrylic polymer (B) having a reactive group was measured at 25°C in a solvent of chloroform with an automated viscometer AVL-2C manufactured by SUN Electronic Industries Corporation.

(Mean Particle Diameter of Acrylic Rubber-Containing Polymer (A))

The mass mean particle diameter of the acrylic rubber-containing polymer (A) was measured by dynamic light scattering with a light scattering photometer DLS-700 (trade name) manufactured by Otsuka Electronics Co., Ltd.

(Gel Content of Acrylic Rubber-Containing Polymer (A))

An acetone solution obtained by dissolving 0.5 g of the acrylic rubber-containing polymer (A) as mass before extraction M in 50 mL of acetone was refluxed at 65°C for 4 hours. The obtained extract was subjected to centrifugation with a high-speed refrigerated centrifuge (manufactured by Hitachi Koki Co., Ltd, trade name: CR21G) at a 14000 rpm in rotation number at 4°C for 30 minutes. The resultant solution was removed by decantation, and thus, the remaining solid was obtained. This solid was subjected to reflux, centrifugation, and decantation again. The mass of the acetone insoluble fraction obtained by drying the resultant solid at 50°C for 24 hours was measured as mass after extraction m. From the mass before extraction M and the mass after extraction m, and by the following formula, the gel content G (%) of the acrylic rubber-containing polymer (A) was calculated.

$$\text{gel content G (\%)} = (\text{mass after extraction m (g)}/\text{mass before extraction M (g)}) \times 100$$

(Tg of Acrylic Rubber-Containing Polymer (A), and Tg of Acrylic Polymer (B) Having Reactive Group)

The Tg's were calculated using the Tg values of the homopolymers of the monomer components (described in 1989. Polymer Handbook, edited by J. BRANDRUP: Interscience) from the FOX equation.

(Molecular weight (Mw) of Acrylic Rubber-Containing Polymer (A))

The molecular weight (Mw) of the acrylic rubber-containing polymer (A) was measured in terms of polystyrene with high-speed GPC equipment HLC-8420GPC (manufactured by Tosoh Corporation) to which a GPC column that was linked TSKgel SuperMultiporeHZ-N, TSKgel guardcolumn SuperMP(HZ)-H, and TSKgel Super H-RC was set, and a solvent of THF.

(Melt Flow Rate (M1))

Measured was the melt flow rate (M1) of a sample of 4 g in an amount for 4 minutes in retention time with a melt indexer (manufactured by Tateyama Kagaku High-Technologies Co., Ltd., model: L227-42 (type L220)) under the conditions that the temperature was 240°C, and the load was 49 N conforming to JIS K7210 (method A). The interval of the cut off time for the sample was set for 30 seconds to 120 seconds depending on the melt flow rate (M1) of the sample to measure the discharge rate per unit time, so that the melt flow rate (M1) in terms of g/10min was calculated.

(Melt Flow Rate (M2))

Measured was the melt flow rate (M2) of a sample of 4 g in an amount for 20 minutes in retention time with a melt indexer (manufactured by Tateyama Kagaku High-Technologies Co., Ltd., model: L227-42 (type L220)) under the conditions that the temperature was 240°C, and the load was 49 N conforming to JIS K7210 (method A). The interval of the cut off time for the sample was set for 30 seconds to 120 seconds depending on the melt flow rate (M2) of the sample to measure the discharge rate per unit time, so that the melt flow rate (M2) in terms of g/10min was calculated.

(MFR Retention (M2/M1))

The MFR retention (M2/M1) was calculated as the ratio of the melt flow rate (M2) for 20 minutes in retention time to the melt flow rate (M1) for 4 minutes in retention time.

(5% Weight Loss Temperatures of Compound (D) and Compounds of Comparative Examples)

The 5% weight loss temperature of the compound (D) was measured with a differential simultaneous thermogravimetric analyzer (manufactured by Seiko Instruments Inc., model: TG/DTA6200) in an air atmosphere at 10°C/min in heating rate. Table 2 shows the 5% weight loss temperatures of the compound (D) used in each example and the compounds used in comparative examples.

Table 2

(Table 2)

| | 5% weight loss temperature (°C) |
|---|---|
| BPEF | 346 |
| BPF | 317 |
| 2,2-bis(4-hydroxycyclohexyl)propane | 209 |
| 1,4-bis(2-hydroxyethoxy)benzene | 220 |
| PEG-20000 | 237 |
| MS-6 | 293 |
| Chimassorb 2020 FDL | 336 |

BPEF: 9,9-bis[4-(2-hydroxyethoxy)phenyl]fluorene

[C13]

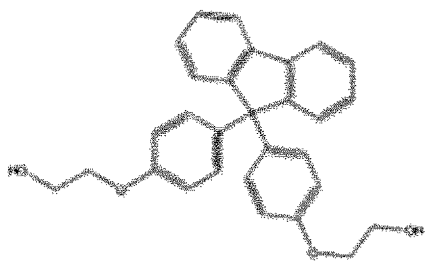

BPF: 9,9-bis(4-hydroxyphenyl)fluorene

[C14]

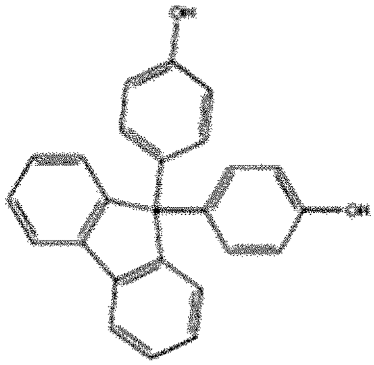

1,4-bis(2-hydroxyethoxy)benzene

[C15]

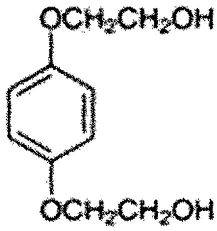

2,2-bis(4-hydroxycyclohexyl)propane

[C16]

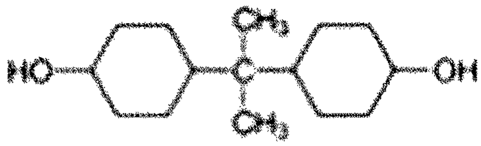

PEG-20000

[C17]

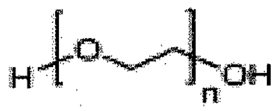

bis(1,2-hydroxystearic acid)magnesium (MS-6)

[C18]

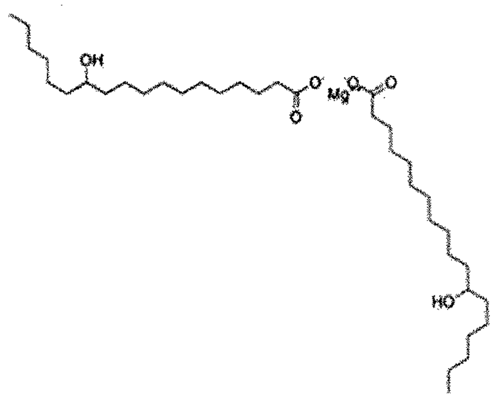

Chimassorb 2020 FDL

[C19]

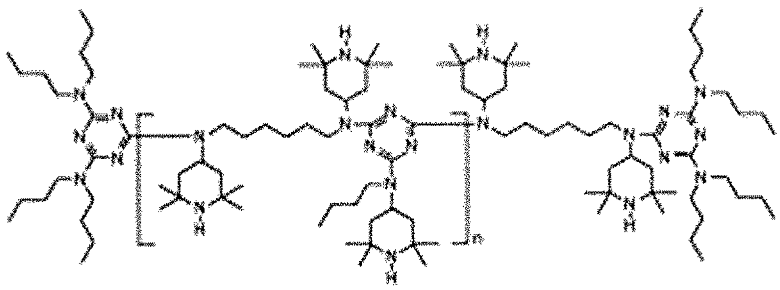

(Calculation of Total Van der Waals Volume $V^{Ring}$ Corresponding to Ring Structure of Compound (D), and Ratio $V^{Ring}/X$ of $V^{Ring}$ to Molecular Weight X of Compound (D))

The total Van der Waals volume $V^{Ring}$ (Å$^3$) corresponding to the ring structure was calculated by the following method.

First, single bonds bonding the ring and the other moiety were broken. The resultant dangling bonds were terminated with hydrogen atoms, and thereby, model molecules corresponding to the ring structure and the other moiety were created. At this time, single bonds bonding rings to each other were not broken. Subsequently, the structure of the molecule before cleaved and the structures of the respective model molecules after cleaved were optimized using a Universal Force Field (J. Am. Chem. Soc. 114 (1992) 10024) to calculate the Van der Waals volumes. The van der Waals volumes of the model molecules were increased by bonding hydrogen atoms to the dangling bonds. Thus, the total Van der Waals volume corresponding to the ring structure $V^{Ring}$ (Å$^3$) was calculated by the following equation in view of the correction of subtracting this increase.

[Math. 5]

$$V^{Ring} = V_{model}^{Ring} - N_H^{Ring} \times V_H$$

where

[Math. 6]

$$V_{model}^{Ring}$$

was the total Van der Waals volume of the model molecule corresponding to the ring structure, and

[Math. 7]

$$N_H^{Ring}$$

was the total number of the hydrogen atoms used for terminating the dangling bonds on the side corresponding to the ring structure when the model molecule corresponding to the ring structure was created, and $V_H$ was the mean value of the volumes each increased per one hydrogen atom bonded after the bonds were broken, and was calculated by the following equation.

[Math. 8]

$$V_H = (V_{model} - V_b)/N_H$$

where $V_{model}$ was the total Van der Waals volume of all the model molecules terminated with hydrogen atoms after cleaved, $V_b$ was the Van der Waals volume of the molecule before cleaved, and $N_H$ was the total number of the hydrogen atoms used for terminating the dangling bonds when all the model molecules were created. RDKit (http://www.rdkit.org) was used for optimizing the structures and calculating the Van der Waals volumes. From the obtained total Van der Waals volume $V^{Ring}$ ($Å^3$) corresponding to the ring structure, and the molecular weight (X), $V^{Ring}/X$ was calculated. The results are shown in table 3.

Table 3

(Table 3)

| | Ring structure | Total Van der Waals volume corresponding to ring structure ($Å^3$) ($V^{Ring}$) | Molecular weight (X) | $V^{Ring}/X$ |
|---|---|---|---|---|
| BPEF | 9,9-diphenylfluorene | 293.51 | 438.52 | 0.67 |
| BPF | 9,9-diphenylfluorene | 293.33 | 350.42 | 0.84 |
| 2,2-bis(4-hydroxycyclohexyl) propane | benzene | 72.15 | 198.22 | 0.36 |
| 1,4-bis(2-hydroxyethoxy) benzene | cyclohexane | 181.21 | 240.39 | 0.75 |
| PEG-20000 | none | 0.00 | 20000 | 0.00 |
| MS-6 | none | 0.00 | 623.26 | 0.00 |
| Chimassorb 2020 FDL (n=2) | piperidine triazine | 765.82 | 2425.95 | 0.32 |

(continued)

| | Ring structure | Total Van der Waals volume corresponding to ring structure (Å$^3$) ($V^{Ring}$) | Molecular weight (X) | $V^{Ring}$/X |
|---|---|---|---|---|
| Chimassorb 2020 FDL (n=3) | piperidine triazine | 1026.08 | 3108.05 | 0.33 |

(Transparency (Total Luminous Transmittance, and Haze))

The total luminous transmittance was measured conforming to JIS K7361-1, and the haze was measured conforming to JIS K7136. Both were measured with a haze meter (manufactured by Nippon Denshoku Industries Co., Ltd., trade name: Haze Meter NDH 4000) under the conditions that the light source was D65, and the temperature was 25°C.

(Surface Glossiness at 60° (Gs 60°))

The surface glossiness at 60° of the face of the film which had matting properties was measured lengthways (in the machine direction or MD) and widthways (in the transverse direction or TD) with a gloss meter (manufactured by Konica Minolta Japan, Inc., trade name: GM-268Plus) conforming to JIS Z8741.

(Arithmetic Mean Roughness (Ra) and Mean Width of Profile Elements (Rsm))

The arithmetic mean roughness (Ra) and the mean width of the profile elements (Rsm) were measured with surface roughness measuring instrument (manufactured by Tokyo Seimitsu Co., Ltd., trade name: SURFCOM 1400D) under the conditions that the measured length was 4.0 mm, the evaluation length was 4.0 mm, the cut off wavelength was 0.8 mm, and the measurement rate was 0.3 mm/s conforming to JIS B0601-2001. A long sample like the film was able to be measured both lengthways (MD) and widthways (TD). For the evaluation, it was necessary to do the measurement in the TD only or in the MD only.

The arithmetic mean roughness (Ra) represented the value obtained by the following equation in terms of micrometer (μm) when only the sampling length was extracted from the roughness profile in the direction of its mean line, the mean line of this extracted component was plotted on the X-axis and the longitudinal magnification was plotted on the Y-axis, and the roughness profile was expressed by y = f(x).

[Math. 9]

$$\mathrm{Ra} = \frac{1}{l}\int_0^l [f(x)]\,dx$$

The mean width of the profile elements (Rsm) was the average of the profile element widths Xs in the sampling length, and represented the value obtained by the following equation in terms of micrometer (μm). Xsi was the length corresponding to one profile element.

[Math. 10]

$$\mathrm{Rsm} = \frac{1}{m}\sum_{i=1}^{m} Xsi$$

(Number of Fish Eyes of Film)

Fish eyes each having a size of no less than 0.001 mm$^2$ on the film were detected with an offline-type FE counter (Mec Co., Ltd., model: LSC-4500). The measuring area was set to be 0.5 m$^2$ in total, and the total number of the fish eyes in the area of 0.5 m$^2$ was measured.

<Acrylic Rubber-Containing Polymer (A)>

(Production Example 1) Production of Rubber-Containing Polymer by Multistage Polymerization (I)

Into a vessel with an agitator, 10.8 parts of a deionized water was prepared, and thereafter, a monomer component (i-a-1) comprising 0.3 parts of MMA, 4.5 parts of n-BA, 0.2 parts of BDMA, 0.05 parts of AMA, and 0.025 parts of CHP was put, and stirred and mixed at room temperature. Next, while stirring, 1.3 parts of RS610 was put into the vessel. The stirring was continued for 20 minutes, so that an "emulsion 1" was prepared.

Next, 156.0 parts of a deionized water was put into a polymerization vessel with a reflux condenser, and the temperature was raised to 74°C. Further, a mixture obtained by adding, to 4.5 parts of a deionized water, 0.20 parts of sodium formaldehydesulfoxylate, 0.0001 parts of ferrous sulfate, and 0.0003 parts of EDTA was prepared, and this mixture was put into the polymerization vessel. Next, the emulsion 1 was dripped into the polymerization vessel for 9 minutes while stirring in a nitrogen atmosphere, and thereafter, the reaction was continued for 15 minutes, so that the polymerization of a first elastic polymer (I-a1) was completed.

Subsequently, a monomer component (i-a-2) comprising 9.6 parts of MMA, 14.4 parts of n-BA, 1 part of BDMA, 0.25 parts of AMA, and 0.16 parts of CHP was dripped into the polymerization vessel for 90 minutes, and thereafter, the reaction was continued for 60 minutes, so that a second elastic polymer (I-a2) was produced. Through the foregoing, an elastic polymer (I-A) comprising the first elastic polymer (I-a1) and the second elastic polymer (I-a2) was obtained. When the monomer components for the first elastic polymer (I-a1) and the monomer components for the second elastic polymer (I-a2) were separately polymerized under the same conditions as the foregoing, the Tg of the polymer (I-a1) was - 48°C, and the Tg of the polymer (I-a2) was -10°C.

Subsequently, a monomer component (i-c) comprising 6 parts of MMA, 4 parts of MA, 0.075 parts of AMA, and 0.013 parts of CHP was dripped into the polymerization vessel for 45 minutes, and thereafter, the reaction was continued for 60 minutes, so that an intermediate polymer (I-C) was formed. When the monomer components for the intermediate polymer (I-C) were separately polymerized under the same conditions as the foregoing, the Tg of the polymer (I-C) was 60°C.

Subsequently, a monomer component (i-b) comprising 57 parts of MMA, 3 parts of MA, 0.075 parts of t-BHP, and 0.264 parts of n-OM was dripped into the polymerization vessel for 140 minutes, and thereafter, the reaction was continued for 60 minutes, so that a rigid polymer (I-B) was formed, and then, a polymer latex of the rubber-containing polymer by multistage polymerization (I) was obtained. The mean particle diameter of the obtained rubber-containing polymer by multistage polymerization (I) in the form of latex was 0.11 μm. When the monomer components for the rigid polymer (I-B) were separately polymerized under the same conditions as the foregoing, the Tg of the rigid polymer (I-B) was 99°C.

The obtained polymer latex of the rubber-containing polymer by multistage polymerization (I) was filtered using a vibration type filtration device with an SUS mesh (average mesh opening: 54 μm) as a filter medium, and thereafter, salted out in an aqueous solution containing 3.5 parts of calcium acetate, cleaned with water, and collected; thereafter, dried, so that a rubber-containing polymer by multistage polymerization (I) in the form of powder was obtained. Table 4 shows the list of each monomer component. The rubber-containing polymer by multistage polymerization (I) had a gel content of 70%, and a Mw of 58,000.

(Production Example 2) Production of Rubber-Containing Polymer by Multistage Polymerization (II)

A rubber-containing polymer by multistage polymerization (II) was produced by the same method as in production example 1 except that each monomer component was changed as shown in table 4.

Into a vessel with an agitator, 10.8 parts of a deionized water was prepared, and thereafter, a monomer component comprising 0.3 parts of MMA, 4.5 parts of n-BA, 0.2 parts of BDMA, 0.05 parts of AMA, and 0.025 parts of CHP was put, and stirred and mixed at room temperature. Next, while stirring, 1.1 parts of RS610 was put into the vessel. The stirring was continued for 20 minutes, so that an "emulsion" was prepared.

Next, 155.8 parts of a deionized water was put into a polymerization vessel with a reflux condenser, and the temperature was raised to 74°C. Further, a mixture obtained by adding, to 4.5 parts of a deionized water, 0.20 parts of sodium formaldehydesulfoxylate, 0.0001 parts of ferrous sulfate, and 0.0003 parts of EDTA was prepared, and this mixture was put into the polymerization vessel. Next, the emulsion was dripped into the polymerization vessel for 9 minutes while stirring in a nitrogen atmosphere, and thereafter, the reaction was continued for 15 minutes, so that the polymerization of a first elastic polymer (II-a1) was completed.

Subsequently, a second elastic monomer component comprising 1.5 parts of MMA, 22.5 parts of n-BA, 1 part of BDMA, 0.25 parts of AMA, and 0.16 parts of CHP was dripped into the polymerization vessel for 90 minutes, and thereafter, the reaction was continued for 60 minutes, so that a second elastic polymer (II-a2) was produced. Through the foregoing, an elastic polymer comprising the first elastic polymer (II-a1) and the second elastic polymer (II-a2) was

obtained. When the monomer components for the first elastic polymer (II-a1) and the monomer components for the second elastic polymer (II-a2) were separately polymerized under the same conditions as the foregoing, the Tg of the polymer (II-a1) was -45°C, and the Tg of the polymer (II-a2) was -45°C.

Subsequently, a monomer component comprising 6 parts of MMA, 4 parts of n-BA, 0.075 parts of AMA, and 0.013 parts of CHP was dripped into the polymerization vessel for 45 minutes, and thereafter, the reaction was continued for 60 minutes, an intermediate polymer (II-C) was formed. When the monomer components for the intermediate polymer (II-C) were separately polymerized under the same conditions as the foregoing, the Tg of the polymer (II-C) was 20°C.

Subsequently, a monomer component comprising 55.2 parts of MMA, 4.8 parts of n-BA, 0.075 parts of t-BHP, and 0.220 parts of n-OM was dripped into the polymerization vessel for 140 minutes, and thereafter, the reaction was continued for 30 minutes, a rigid polymer (II-B) was formed, and then, a polymer latex of the rubber-containing polymer by multistage polymerization (II) was obtained. The mean particle diameter of the obtained rubber-containing polymer by multistage polymerization (II) in the form of latex was 0.12 μm. When the monomer components for the rigid polymer (II-B) were separately polymerized under the same conditions as the foregoing, the Tg of the rigid polymer (II-B) was 84°C.

The obtained polymer latex of the rubber-containing polymer by multistage polymerization (II) was filtered using a vibration type filtration device with an SUS mesh (average mesh opening: 54 μm) as a filter medium, and thereafter, salted out in an aqueous solution containing 3 parts of calcium acetate, cleaned with water, and collected; thereafter, dried, so that obtain a rubber-containing polymer by multistage polymerization (II) in the form of powder was obtained. Table 3 shows the list of each monomer component. The rubber-containing polymer by multistage polymerization (II) had a gel content of 60%, and a Mw of 58,000.

(Production Example 3) Production of Rubber-Containing Polymer by Multistage Polymerization (III)

A rubber-containing polymer by multistage polymerization (III) was produced by the same method as in production example 1 except that each monomer component was changed as shown in table 3.

Into a polymerization vessel with a reflux condenser, 186.3 parts of a deionized water was put and the temperature was raised to 79°C. Further, a mixture obtained by adding, to 3.4 parts of a deionized water, 0.25 parts of sodium formaldehydesulfoxylate, 0.000025 parts of ferrous sulfate, and 0.000075 parts of EDTA was prepared, and this mixture was put into the polymerization vessel.

Next, while stirring in a nitrogen atmosphere, 1/10 of a prepared mixture of: a monomer component comprising 11.25 parts of MMA, 12.5 parts of n-BA, 1.25 parts of St, 0.75 parts of BDMA, 0.09 parts of AMA, and 0.044 parts of CHP; and 0.75 parts of RS610 was dripped into the polymerization vessel for 4 minutes, and thereafter, the reaction was continued for 15 minutes; thereafter, the remaining 9/10 of the prepared mixture was dripped into the polymerization vessel for 108 minutes, and thereafter, 0.125 parts of sodium formaldehydesulfoxylate was put at the time when the reaction had been continued for 40 minutes, and the reaction was continued for 55 minutes, so that the polymerization of a first elastic polymer was completed.

Next, a monomer component comprising 30.94 parts of MMA, 6.56 parts of n-BA, 0.09 parts of BDMA, 0.66 parts of AMA, and 0.106 parts of CHP was dripped into the polymerization vessel for 180 minutes, and thereafter, 0.125 parts of sodium formaldehydesulfoxylate was put at the time when the reaction had been continued for 105 minutes, and the reaction was continued for 120 minutes, so that a second elastic polymer was produced. Through the foregoing, an elastic polymer comprising the first elastic polymer and the second elastic polymer was obtained. 6-36

Subsequently, a monomer component comprising 35.63 parts of MMA, 1.88 parts of MA, 0.064 parts of t-BHP, and 0.113 parts of n-OM was dripped into the polymerization vessel for 120 minutes, so that a rigid polymer was formed, and then, a polymer latex of the rubber-containing polymer by multistage polymerization (III) was obtained. The mean particle diameter of the obtained rubber-containing polymer by multistage polymerization (III) in the form of latex was 0.26 μm. 99

The obtained polymer latex of the rubber-containing polymer by multistage polymerization (III) was filtered using a vibration type filtration device with an SUS mesh (average mesh opening: 54 μm) as a filter medium, and thereafter, salted out in an aqueous solution containing 5.0 parts of calcium acetate, cleaned with water, and collected; thereafter, dried, so that a rubber-containing polymer by multistage polymerization (III) in the form of powder was obtained. Table 3 shows the list of each monomer component. The rubber-containing polymer by multistage polymerization (III) had a gel content of 90%, and a Mw of 45,000.

Table 4

(Table 4)

| Rubber-containing polymer by multistage polymerization | | | | (I) | (II) | (III) |
|---|---|---|---|---|---|---|
| Polymer | | Monomer component | Name of compound | parts by mass | parts by mass | parts by mass |
| | first elastic | | MMA | 0.3 | 0.3 | 11.25 |
| | | | n-BA | 4.5 | 4.5 | 12.5 |
| elastic polymer I-A | polymer I-a1 | monomer component (i-a-1) | - | - | - | 1.25 |
| | | | BDMA | 0.2 | 0.2 | 0.75 |
| | | | AMA | 0.05 | 0.05 | 0.09 |
| | | | CHP | 0.025 | 0.025 | 0.044 |
| | second elastic polymer I-a2 | monomer component (i-a-2) | MMA | 9.6 | 1.5 | 30.94 |
| | | | n-BA | 14.4 | 22.5 | 6.56 |
| | | | BDMA | 1 | 1 | 0.09 |
| | | | AMA | 0.25 | 0.25 | 0.66 |
| | | | CHP | 0.016 | 0.016 | 0.106 |
| intermediate polymer I-C | | monomer component (i-c) | MMA | 6 | 6 | - |
| | | | MA | 4 | 4 | - |
| | | | AMA | 0.075 | 0.075 | - |
| | | | CHP | 0.013 | 0.013 | - |
| rigid polymer I-B | | monomer component (i-b) | MMA | 57 | 55.2 | 35.63 |
| | | | MA | 3 | 4.8 | 1.88 |
| | | | t-BHP | 0.075 | 0.075 | 0.064 |
| | | | n-OM | 0.264 | 0.220 | 0.113 |

<Acrylic Polymer (B) Having Reactive Group>

(Production Example 4) Production of Polymer Having Hydroxy Group

A monomer mixture comprising 262 parts of a deionized water, 13.8 parts of a 10% tribasic calcium phosphate slurry, 60.0 parts of MMA, 10 parts of MA, 30.0 parts of 2-hydroxyethyl methacrylate, 0.25 parts of n-dodecyl mercaptan, and 0.52 parts of lauroyl peroxide was put into a polymerization vessel with a reflux condenser, and a nitrogen gas was sufficiently substituted for the atmosphere in the polymerization vessel. Next, the temperature was raised to 78°C while the monomer mixture was stirred, and the reaction was performed for 2 hours in the nitrogen atmosphere.

Subsequently, in the polymerization vessel, the liquid temperature was raised to 85°C, and thereafter, 0.022 parts of potassium persulfate was added to be further kept for 90 minutes, so that polymer beads were obtained. The obtained polymer beads were sieved under the condition of 150 mesh (mesh opening: 100 μm). The beads having passed through the mesh were dehydrated and dried, so that beads of a polymer having a hydroxyl group were obtained. The obtained polymer having a hydroxyl group had a glass transition temperature of 77°C, an intrinsic viscosity of 0.069 L/g, and a mean particle diameter of 90 μm.

<Transparent Acrylic Resin>

(Production Example 5) Production of Transparent Acrylic Resin Composition

To 80 parts of the rubber-containing polymer by multistage polymerization (I) obtained in production example 1, 10 parts of the rubber-containing polymer by multistage polymerization (III) obtained in production example 3, and 10 parts of alkyl methacrylate-alkyl acrylate copolymer (manufactured by Mitsubishi Chemical Corporation; trade name: Acrypet MD) as the acrylic polymer (C) having no reactive group, 1.4 parts of a benzotriazole-based ultraviolet absorber

(manufactured by BASF Japan Ltd.; trade name: Tinuvin 234), 0.3 parts of a hindered amine light stabilizer (manufactured by ADEKA Corporation; trade name: ADK STAB LA-57G), and 0.1 parts of hindered phenolic antioxidant (manufactured by BASF Japan Ltd.; trade name: Irganox 1076) as additives were added, and thereafter, the resultant was mixed with a Henschel mixer. Thereafter, using a twin-screw extruder (manufactured by Toshiba Machine Co., Ltd., trade name: TEM-35B, hereinafter the same is applied), the resultant was extruded in the form of strand under the conditions that the cylinder temperature was 180 to 240°C, and the die head temperature was 240°C while foreign matters were removed therefrom with a screen mesh (manufactured by Nippon Seisen Co., Ltd., trade name: NF-12T, nominal pore size: 40 μm), passed through a water bath to be cooled, and thereafter, cut, so that pellets of a transparent acrylic resin composition were obtained.

<Example 1>

To 75 parts of the rubber-containing polymer by multistage polymerization (I) obtained in production example 1, which was the acrylic rubber-containing polymer (A), 23 parts of an alkyl methacrylate-alkyl acrylate copolymer (manufactured by Mitsubishi Chemical Corporation; trade name: Acrypet VH (MMA/MA = 97/3)) as the acrylic polymer (C) having no reactive group, 2 parts of the polymer having a hydroxy group, which was obtained in production example 4 as the acrylic polymer (B) having a reactive group, 2.5 parts of 9,9-bis[4-(2-hydroxyethoxy)-phenyl]fluorene (bisphenoxyethanol fluorene, BPEF, manufactured by Osaka Gas Chemicals Co., Ltd.; trade name: OGSOL MF-11) as the compound (D), and 1.6 parts of a high-molecular-weight acrylic external lubricant (manufactured by Mitsubishi Chemical Corporation; trade name: METABLEN L-1000), and 1 part of a high-molecular-weight acrylic polymer (manufactured by Mitsubishi Chemical Corporation; trade name: METABLEN P-551A), 1.1 parts of a phosphoric antioxidant (manufactured by Johoku Chemical Co., Ltd; trade name: JP-333E), 1.1 parts of a benzotriazole-based ultraviolet absorber (manufactured by ADEKA Corporation; trade name: ADK STAB LA-31RG), 0.9 parts of a hindered amine light stabilizer (manufactured by ADEKA Corporation; trade name: ADK STAB LA-57G), and 0.7 parts of a hindered phenolic antioxidant (manufactured by ADEKA Corporation; trade name: ADK STAB AO-60) were added as additives, and thereafter, the resultant was mixed with a Henschel mixer as the acrylic resin composition having matting properties shown in table 5. Thereafter, using a twin-screw extruder (manufactured by Toshiba Machine Co., Ltd., trade name: TEM-35B), the resultant was extruded in the form of strand under the conditions that the cylinder temperature was 170 to 240°C, and the die head temperature was 240°C while foreign matters were removed therefrom with a screen mesh of 200 mesh, passed through a water bath to be cooled, and thereafter, cut to be pelletized. The screw rotation number was 280 rpm, and the resin temperature at a die exit at 20.0 kg/h in discharge rate was 286°C. The obtained pellets had a melt flow rate (M1) of 5.8 g/10min, a melt flow rate (M2) of 5.8 g/10min, and a MFR retention (M2/M1) of 1.01. The evaluation results are shown in table 5.

The obtained pellets were dehumidified and dried a whole day at 85°C to form a matte acrylic resin film having a thickness of 40 μm with a ø40 mm non-bent screw type extruder (L/D=26) with a screen mesh of 200 mesh, and a T-die having a width of 300 mm under the conditions that the cylinder temperature was 200 to 240°C, and the T-die temperature was 245°C. The obtained matte acrylic resin film had an arithmetic mean roughness (Ra) (μm) of 0.10 in MD, and 0.12 in TD; a mean width of profile elements (Rsm) (μm) of 70.7 in MD, and 69.6 in TD; and a surface glossiness at 60° (Gs 60°) of 44.1% in MD, and 45.9% in TD; and the number of fish eyes thereof (in 0.5 $m^2$) was 235/0.5 $m^2$. The evaluation results are shown in table 5.

<Examples 2 to 18, and 20 to 23, and Comparative Examples 1 to 8>

Matte acrylic resin films were formed in the same manner as in example 1 except that the acrylic resin compositions having matting properties had the compositions shown in tables 5 to 7. In examples 20 to 23 and comparative examples 5 and 6, Chimassorb 2020 FDL (trade name, molecular weight: 2600 to 3400) manufactured by BASF was used as a light stabilizer. The evaluation results of the obtained pellets and matte acrylic resin films are shown in tables 5 to 7.

<Example 19>

The pellets obtained in example 12 as the acrylic resin composition having matting properties to constitute a matte acrylic resin layer, and the pellets obtained in production example 5 as the transparent acrylic resin composition to constitute a transparent acrylic resin layer were dehumidified and dried a whole day at 85°C. The acrylic resin composition having matting properties was plasticized with a ø30 mm non-bent screw type extruder with a screen mesh of 200 mesh under the condition that the cylinder temperature was 200 to 240°C on one hand, and the transparent acrylic resin composition was plasticized with a ø40 mm non-bent screw type extruder with a screen mesh of 500 mesh under the condition that the cylinder temperature was 220 to 240°C on the other hand; then, to form a laminate film having a

thickness of 75 μm with a multi-manifold T-die for two kinds two layers having a 500 mm in width and set at 245°C by bringing the transparent acrylic resin layer into contact with mirror cooling rolls.

When the cross section of the laminate film was observed, the thickness of the matte acrylic resin layer was 7.5 μm, and the thickness of the transparent acrylic resin layer was 67.5 μm. The side of the matte acrylic resin layer where the transparent acrylic resin layer was not laminated had an arithmetic mean roughness (Ra) (μm) of 0.15 in MD, and 0.14 in TD; a mean width of profile elements (Rsm) (μm) of 42.7 in MD, and 49.7 in TD; and a surface glossiness at 60° (Gs 60°) of 27.8% in MD, and 28.9% in TD. The side of the transparent acrylic resin layer where the matte acrylic resin layer formed from the matte acrylic resin film was not laminated had a surface glossiness at 60° (Gs 60°) of 145% in MD, and 146% in TD. The evaluation results are shown in table 6.

Table 5

| (Table 5) | | | | | | | | | | | | | |
|---|---|---|---|---|---|---|---|---|---|---|---|---|---|
| | | | Example 1 | Example 2 | Example 3 | Example 4 | Example 5 | Example 6 | Example 7 | Example 8 | Example 9 | Example 10 | Example 11 |
| Acrylic resin composition having matting properties (parts by mass) | acrylic rubber-containing polymer (A) | rubber-containing polymer(I) | 75 | 75 | 75 | 75 | 75 | 75 | 75 | 75 | 75 | 75 | 75 |
| | | rubber-containing polymer (II) | | | | | | | | | | | |
| | acrylic polymer having reactive group (B) | polymer having hydroxy group | 2 | 4 | 6 | 6 | 8 | 10 | 12 | 14 | 6 | 6 | 6 |
| | acrylic polymer having no reactive group (C) | Acrypet VH | 23 | 21 | 19 | 19 | 17 | 15 | 13 | 11 | 19 | 19 | 19 |
| | compound (D) | BPEF | 2.5 | 2.5 | 2.5 | 5 | 2.5 | 2.5 | 2.5 | 2.5 | | | |
| | | BPF | | | | | | | | | 2.5 | | |
| | | 2.2-bis(4-hydroxycyclohexyl)propane | | | | | | | | | | 2.5 | |
| | | 1.4-bis(2-hvdroxvethoxv)benzene | | | | | | | | | | | 2.5 |
| | high-molecular-weight acrvlic external lubricant | METABLEN L-1000 | 1.6 | 1.6 | 1.6 | 1.6 | 1.6 | 1.6 | 1.6 | 1.6 | 1.6 | 1.6 | 1.6 |

(continued)

| (Table 5) | | | | | | | | | | | | | |
|---|---|---|---|---|---|---|---|---|---|---|---|---|---|
| | | | Example 1 | Example 2 | Example 3 | Example 4 | Example 5 | Example 6 | Example 7 | Example 8 | Example 9 | Example 10 | Example 11 |
| | high-molecular-weight acrylic polymer | METABLEN P-551A | 1 | 1 | 1 | 1 | 1 | 1 | 1 | 1 | 1 | 1 | 1 |
| | phosphoric antioxidant | JP-333E | 1.1 | 1.1 | 1.1 | 1.1 | 1.1 | 1.1 | 1.1 | 1.1 | 1.1 | 1.1 | 1.1 |
| | phenolic antioxidant | ADK STAB AO-60 | 0.7 | 0.7 | 0.7 | 0.7 | 0.7 | 0.7 | 0.7 | 0.7 | 0.7 | 0.7 | 0.7 |
| | ultraviolet absorber | ADK STAB LA-31RG | 1.1 | 1.1 | 1.1 | 1.1 | 1.1 | 1.1 | 1.1 | 1.1 | 1.1 | 1.1 | 1.1 |
| | light stabilizer | ADK STAB LA-57G | 0.9 | 0.9 | 0.9 | 0.9 | 0.9 | 0.9 | 0.9 | 0.9 | 0.9 | 0.9 | 0.9 |
| | | Chimassorb 2020 FDL | | | | | | | | | | | |
| | poshphoric antioxidant (maa%) | | 1.01 | 1.01 | 1.01 | 0.99 | 1.01 | 1.01 | 1.01 | 1.01 | 1.01 | 1.01 | 1.01 |
| | compound (D) (mass%) | | 2.30 | 2.30 | 2.30 | 4.49 | 2.30 | 2.30 | 2.30 | 2.30 | 2.30 | 2.30 | 230 |
| Physical properties of pellets | melt flow rate (M1) [g/10min] | | 5.8 | 4.9 | 4.4 | 5.8 | 4.0 | 3.5 | 2.9 | 2.4 | 4.1 | 4.9 | 5.2 |
| | melt flow rate (M2) [g/10min] | | 5.8 | 4.9 | 4.4 | 5.7 | 3.9 | 3.4 | 2.8 | 2.2 | 4.3 | 4.9 | 5.1 |
| | MFR retention (M2/M1) [ - ] | | 1.01 | 0.99 | 1.00 | 0.99 | 0.97 | 0.98 | 0.96 | 0.94 | 1.04 | 0.99 | 0.99 |

(continued)

| (Table 5) | | | | | | | | | | | | | |
|---|---|---|---|---|---|---|---|---|---|---|---|---|---|
| | | | Example 1 | Example 2 | Example 3 | Example 4 | Example 5 | Example 6 | Example 7 | Example 8 | Example 9 | Example 10 | Example 11 |
| Physical properties of film | number offish eves (per $0.5m^2$) | | 235 | 205 | 47 | 131 | 16 | 27 | 30 | 19 | 103 | 328 | 358 |
| | transparency | total luminous transmittance | 91.5 | 92.1 | 93.8 | 93.8 | 95.5 | 96.5 | 97.3 | 97.7 | 93.8 | 93.4 | 93.8 |
| | | haze | 31.8 | 56.9 | 71.8 | 72.8 | 80.8 | 85.2 | 88.4 | 90.5 | 71.6 | 69.7 | 72.3 |
| | arithmetic mean roughness (Ra) [μm] | | 0.10 | 0.20 | 0.29 | 0.24 | 0.35 | 0.46 | 0.56 | 0.65 | 0.22 | 0.30 | 0.29 |
| | | TD | 0.12 | 0.19 | 0.24 | 0.27 | 0.34 | 0.45 | 0.52 | 0.64 | 0.23 | 0.26 | 0.30 |
| | mean width of profile elements (Rsm) [μm] | | 70.7 | 56.7 | 72.8 | 75.5 | 69.5 | 67.5 | 86.1 | 77.6 | 66.8 | 71.6 | 68.3 |
| | | TD | 69.6 | 58.0 | 80.4 | 79.7 | 79.8 | 63.6 | 74.1 | 71.5 | 88.1 | 80.5 | 73.4 |
| | surface glossiness at 60° | | 44.1 | 20.6 | 13.4 | 12.8 | 10.0 | 8.3 | 7.1 | 6.4 | 13.9 | 13.4 | 12.9 |
| | | TD | 45.9 | 21.3 | 13.5 | 12.8 | 10.1 | 8.5 | 7.3 | 6.6 | 14.0 | 13.4 | 12.8 |

(Table 6)

| | | | Example 12 | Example 13 | Example 14 | Example 15 | Example 16 | Example 17 | Example 18 | Example 19 | Example 20 | Example 21 | Example 22 | Example 23 |
|---|---|---|---|---|---|---|---|---|---|---|---|---|---|---|
| Acrylic resin composition having matting properties (parts by mass) | acrylic rubber-containing polymer (A) | rubber-containing polymer (I) | 75 | 75 | 75 | 75 | 75 | 50 | 50 | 75 | 75 | 75 | 75 | 75 |
| | | rubber-containing polymer (II) | | | | | | 25 | 25 | | | | | |
| | acrylic polymer having reactive group (B) | polymer having hydroxy group | 5 | 5 | 5 | 5 | 5 | 5 | 8 | 5 | 7 | 7 | 7.5 | 10 |
| | acrylic polymer having no reactive group (C) | Acrypet VH | 20 | 20 | 20 | 20 | 20 | 20 | 17 | 20 | 18 | 18 | 17.5 | 15 |
| | compound (D) | BPEF | 2 | 2 | 2 | 1 | 3 | 2 | 2.5 | 2 | 2.5 | 2.5 | 2.5 | 2.5 |
| | | BPF | | | | | | | | | | | | |
| | | 2.2-bis(4-hydroxycyclohexyl)propane | | | | | | | | | | | | |
| | | 1.4-bis(2-hvdroxyethoxy)benzene | | | | | | | | | | | | |
| | high-molecular-weight acrylic external lubricant | METABLENL-1000 | 1.6 | 3 | 1.6 | 1.6 | 1.6 | 1.6 | 1.6 | 1.6 | 0.8 | 0.8 | 0.8 | 0.8 |
| | high-molecular-weight acrylic nolvmer | METABLEN P-551A | 1 | 1 | 1 | 1 | 1 | 1 | 2.5 | 1 | 3 | 3 | 3 | 3 |

(continued)

| (Table 6) | | | | | | | | | | | | | | |
|---|---|---|---|---|---|---|---|---|---|---|---|---|---|---|
| | | | Example 12 | Example 13 | Example 14 | Example 15 | Example 16 | Example 17 | Example 18 | Example 19 | Example 20 | Example 21 | Example 22 | Example 23 |
| | phosphoric antioxidant | JP-333E | 0.7 | 0.7 | 1.1 | 0.7 | 0.7 | 0.7 | 0.5 | 0.7 | 0.7 | 0.7 | 0.7 | 0.7 |
| | phenolic antioxidant | ADK STAB AO-60 | 0.7 | 0.7 | 0.7 | 0.7 | 0.7 | 0.7 | 0.7 | 0.7 | 0.7 | 0.7 | 0.7 | 0.7 |
| | ultraviolet absorber | ADK STAB LA-31RG | 1.1 | 1.1 | 1.1 | 1.1 | 1.1 | 1.1 | 1.1 | 1.1 | 1.1 | 1.1 | 1.1 | 1.1 |
| | light stabilizer | ADK STAB LA-57G | 0.9 | 0.9 | 0.9 | 0.9 | 0.9 | 0.9 | 0.4 | 0.9 | 0 | 0 | 0 | 0 |
| | | Chimassorb 2020 FDL | | | | | | | | | 0.9 | 0.3 | 0.3 | 0.3 |
| | phosphoric antioxidant (mass%) | | 0.65 | 0.64 | 1.01 | 0.65 | 0.64 | 0.65 | 0.46 | 0.65 | 0.64 | 0.64 | 0.64 | 0.64 |
| | compound (D) (mass%) | | 1.85 | 1.83 | 1.85 | 0.93 | 2.75 | 1.85 | 229 | 1.85 | 2.28 | 2.29 | 229 | 2.29 |
| Physical properties of pellets | melt flow rate (M1) [g/10min] | | 4.5 | 4.3 | 4.7 | 4.1 | 4.9 | 5.0 | 4.0 | 4.2 | 3.4 | 3.2 | 3.0 | 2.6 |
| | melt flow rate (M2) [g/10min] | | 4.4 | 4.2 | 4.6 | 4.0 | 4.8 | 4.9 | 3.4 | 4.1 | 3.4 | 3.2 | 3.0 | 2.4 |
| | MFR retention (M2/M1) [ - ] | | 0.98 | 0.98 | 0.99 | 0.99 | 0.98 | 0.98 | 0.85 | 0.98 | 1.02 | 1.01 | 1.01 | 0.93 |

(continued)

| (Table 6) | | | | | | | | | | | | | | |
|---|---|---|---|---|---|---|---|---|---|---|---|---|---|---|
| | | | Example 12 | Example 13 | Example 14 | Example 15 | Example 16 | Example 17 | Example 18 | Example 19 | Example 20 | Example 21 | Example 22 | Example 23 |
| Physical properties of film | number of fish eves (per 0.5m$^2$) | | 94 | 309 | 111 | 286 | 72 | 229 | 105 | | 86 | 59 | 76 | 50 |
| | transparency | total luminous transmittance | 92.1 | 922 | 93.0 | 92.2 | 91.9 | 91.7 | 91.9 | 91.0 | 92.1 | 92.1 | 91.4 | 93.5 |
| | | haze | 62.2 | 61.9 | 67.3 | 61.1 | 59.0 | 58.4 | 60.7 | 31.7 | 64.7 | 63.5 | 61.7 | 75.7 |
| | arithmetic mean roughness (Ra) [μm] | | 0.23 | 0.21 | 0.24 | 0.22 | 0.20 | 0.20 | 0.24 | 0.15 | 0.33 | 0.24 | 0.49 | 0.49 |
| | | TD | 0.22 | 0.24 | 0.24 | 0.22 | 0.20 | 0.22 | 0.25 | 0.14 | 0.31 | 0.26 | 0.47 | 0.47 |
| | mean width of profile elements (Rsm) [μm] | | 72.9 | 74.9 | 65.8 | 60.8 | 59.5 | 66.9 | 88.5 | 42.7 | 108.8 | 84.5 | 99.5 | 99.5 |
| | | TD | 76.3 | 82.3 | 71.0 | 56.9 | 67.5 | 63.4 | 72.1 | 49.7 | 77.9 | 76.6 | 74.2 | 74.2 |
| | surface glossiness at 60° | | 16.5 | 17.3 | 16.2 | 16.6 | 17.2 | 18.8 | 15.8 | 27.8 | 14.4 | 14.8 | 14.2 | 10.3 |
| | | TD | 16.4 | 17.2 | 16.2 | 16.9 | 172 | 18.3 | 15.2 | 28.9 | 14.3 | 14.6 | 14.4 | 11.4 |

| (Table 7) | | | | | | | | | | |
|---|---|---|---|---|---|---|---|---|---|---|
| | | | Comparative example 1 | Comparative example 2 | Comparative example 3 | Comparative example 4 | Comparative example 5 | Comparative example 6 | Comparative example 7 | Comparative example 8 |
| Acrylic resin composition having matting properties (parts by mass) | acrylic rubber-containing polymer (A) | rubber-containing polymer (I) | 75 | 50 | 50 | 50 | 50 | 50 | 75 | 75 |
| | | rubber-containing polymer (II) | - | 25 | 25 | 25 | 25 | 25 | - | - |
| | acrylic polymer having reactive group (B) | polymer having hydroxy group | 6 | 5 | 5 | 5 | 8 | 7 | 6 | 6 |
| | acrylic polymer having no reactive group (C) | Acrypet VH | 19 | 20 | 20 | 20 | 17 | 18 | 19 | 19 |
| | compound (D) | BPEF | - | - | - | - | - | - | - | - |
| | | BPF | - | - | - | - | - | - | - | - |
| | | 2,2-bis(4-hydroxycyclohexyl) propane | - | - | - | - | - | - | - | - |
| | | 1,4-bis(1-hydroxyethoxy) benzene | - | - | - | - | - | - | - | - |
| | | PEG-20000 | - | - | - | - | - | - | 2.5 | - |
| | | MS-6 | - | - | - | - | - | - | - | 2.5 |

(continued)

| (Table 7) | | | | | | | | | | |
|---|---|---|---|---|---|---|---|---|---|---|
| | | | Comparative example 1 | Comparative example 2 | Comparative example 3 | Comparative example 4 | Comparative example 5 | Comparative example 6 | Comparative example 7 | Comparative example 8 |
| | high-molecular-weight acrylic external lubricant | METABLEN L-1000 | 1.6 | 1.6 | 1.6 | 1.6 | 0.4 | 0.4 | 1.6 | 1.6 |
| | high-molecular-weight acrylic polymer | METABLEN P-551A | 1 | 1 | 1 | 1 | 3 | 3 | 1 | 1 |
| | phosphoric antioxidant | JP-333E | 1.1 | 0.7 | 0.5 | 0.3 | 0.7 | 0.7 | 1.1 | 1.1 |
| | phenolic antioxidant | ADK STAB AO-60 | 0.7 | 0.7 | 0.7 | 0.7 | 0.7 | 0.7 | 0.7 | 0.7 |
| | ultraviolet absorber | ADK STAB LA-31RG | 1.1 | 1.1 | 1.1 | 1.1 | 1.1 | 1.1 | 1.1 | 1.1 |
| | light stabilizer | ADK STAB LA-57G | 0.9 | 0.9 | 0.9 | 0.9 | - | - | 0.9 | 0.9 |
| | | Chimassorb 2020 FDL | - | - | - | - | 0.2 | 0.2 | - | - |
| | phosphoric antioxidant (mass%) | | 1.03 | 0.66 | 0.47 | 0.28 | 0.66 | 0.66 | 1.01 | 1.01 |
| | compound (D) (mass%) | | - | - | - | - | - | - | - | - |
| Physical properties of pellets | melt flow rate (M1) [g/10min] | | 3.5 | 4.4 | 4.4 | 4.3 | 2.9 | 3.6 | 5.2 | 5.8 |
| | melt flow rate (M2) [g/10min] | | 3.5 | 4.4 | 3.9 | 3.4 | 2.9 | 3.4 | 5.1 | 4.1 |
| | MFR retention (M2/M1) [ - ] | | 1.01 | 1.01 | 0.89 | 0.78 | 1.00 | 0.96 | 0.98 | 0.71 |

(continued)

| (Table 7) | | | | | | | | | | |
|---|---|---|---|---|---|---|---|---|---|---|
| | | | Comparative example 1 | Comparative example 2 | Comparative example 3 | Comparative example 4 | Comparative example 5 | Comparative example 6 | Comparative example 7 | Comparative example 8 |
| Physical properties of film | number of fish eves (per $0.5m^2$) | | 707 | 586 | 799 | 508 | 1309 | 1216 | 599 | 1227 |
| | transparency | total luminous transmittance | 93.6 | 91.8 | 91.1 | 91.1 | 93.3 | 92.6 | 93.9 | 91.2 |
| | | haze | 69.1 | 57.8 | 44.7 | 32.1 | 69.2 | 63.2 | 72.8 | 57.3 |
| | arithmetic mean roughness (Ra) [μm] | MD | 0.15 | 0.19 | 0.13 | 0.11 | 0.19 | 0.23 | 0.28 | 0.32 |
| | | TD | 0.22 | 0.21 | 0.15 | 0.11 | 0.22 | 0.25 | 0.30 | 0.33 |
| | mean width of profile elements (Rsm) [μm] | MD | 64.8 | 69.0 | 84.4 | 76.8 | 94.9 | 77.4 | 74.5 | 121.8 |
| | | TD | 90.7 | 92.0 | 69.1 | 75.5 | 83.6 | 69.8 | 75.3 | 125.9 |
| | surface glossiness at 60° | MD | 14.7 | 18.5 | 22.3 | 29.8 | 13.8 | 15.3 | 13.4 | 15.3 |
| | | TD | 14.7 | 17.8 | 21.9 | 28.3 | 13.7 | 14.8 | 13.4 | 15.5 |

From the examples and comparative examples, the following were clarified.

It was shown that the number of fish eyes of each of the matte acrylic films and the laminate films (examples 1 to 23), which used the acrylic resin compositions having matting properties of the present invention, was reduced compared to that of each of the films of the comparative examples, which used the acrylic resin compositions to which the compound (D) was not added.

For example, it was also shown that: the number of fish eyes of each of the matte acrylic resin films (examples 3, 4, 9, 10 and 11) was reduced compared to that of the film of comparative example 1: these films had the same composition except the presence or not of the compound (D); and the number of fish eyes of the film of example 7 was reduced compared to that of the film of comparative example 2: these films had the same composition except the presence or not of the compound (D). Further, the number of fish eyes of each film of examples 1 to 23 was better than that of each of the matte acrylic resin films using the acrylic resin compositions having matting properties, which were produced with reference to the examples of patent literature 1 (WO 2019/244791 A1) (comparative examples 5 and 6). Furthermore, no reduction in number of fish eyes was found in comparative examples 7 and 8, where the compounds having a reactive group only but no ring structure were used. The matte acrylic resin films of examples 1 to 23 had good design qualities and decorativeness of the matte external appearance which included luxuriousness and depth.

[Industrial Applicability]

The acrylic resin composition having matting properties of the present invention allows a matte acrylic resin film to be provided: this matte acrylic resin film can lead to a reduction in fish eyes that cause a poor external appearance of the film; has a good matte external appearance, increased thermal stability in forming, and matting properties such that stable production is allowed; and further, is excellent in design qualities of the external appearance; and can be applied to various uses.

As described above, the matte film, the laminate film, the film for decorating, the laminate sheet, and the laminated formed product which are produced from the resin composition of the present invention are particularly suitable for vehicle uses, and building material uses; and for example, specifically, are preferably used for: automotive interior uses such as an instrument panel, a console box, a meter cover, a bezel for door locks, a steering wheel, a base for power window switches, a center cluster, and a dashboard; automotive exterior uses such as a weather strip, a bumper, a bumper guard, a side mud guard, a body panel, a spoiler, a front grille, a strut mount, a wheel cap, a center pillar, a door mirror, a center ornament, a side molding, a door molding, a window molding, etc., a window, a headlamp cover, a tail lamp cover, and a windproof component; uses for AV and furniture products such as a front panel, a button, an emblem, and a surface decorative material; uses for mobile phones such as a housing, a display window, and a button; further, uses for exterior materials for furniture; uses for building interior materials such as a wall, a ceiling, and a floor; uses for building exterior materials such as an exterior wall including a siding, a fence, a roof, a gate door, and a barge board; uses for surface decorative materials for furniture such as a window profile, a door, a handrail, a threshold, and a door header; uses for optical components such as various types of displays, a lens, a mirror, a goggle, and window glass; interior and exterior uses for various vehicles other than automobiles, such as a train, an aircraft, and a ship; and various uses for various packaging containers and materials including a bottle, a cosmetic container, and an accessory case, and miscellaneous goods including a prize and a small item.

## Claims

1. A resin composition comprising:

an acrylic rubber-containing polymer (A) at least having a Tg of lower than 0°C;
an acrylic polymer (B) having a reactive group, the acrylic polymer (B) having a Tg of 30°C or higher; and
a compound (D) that has a ring structure and a group having a reactive group in a molecule thereof, wherein a total Van der Waals volume $V^{Ring}$ (Å$^3$) corresponding to the ring structure, and a molecular weight X of the compound (D) satisfy the following formula (3).

$$\text{Formula (3): } 0.34 \leq V^{Ring}/X$$

2. The resin composition according to claim 1, wherein the compound (D) is a compound represented by the following general formula (1):

[C1]

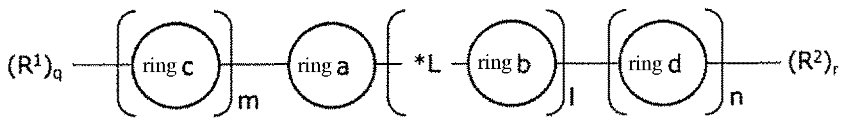

(1)

in the general formula (1),

*L is a direct bond, or a divalent group having no ring structure,
the rings a, b, c and d are each independently a divalent group that may have a substituent group having no ring structure,
1 represents 0 or 1,
m and n are each independently an integer of no less than 0,
q and r are each independently an integer of no less than 1, and
$R^1$ and $R^2$ are each a group having a reactive group: where when q is no less than 2, at least two $R^1$'s may be the same group as, and may be different groups from each other, and when r is no less than 2, at least two $R^2$'s may be the same group as, and may be different groups from each other.

**3.** The resin composition according to claim 2, wherein
in the formula (1), $R^1$ and $R^2$ are each one selected from the group consisting of carboxy group, hydroxy group, acid anhydride group, epoxy group, isocyanate group, amide group, amino group, cyano group, and imine group.

**4.** The resin composition according to claim 2 or 3, wherein
in the formula (1), the ring a is one selected from fluorenylene group, phenylene group, and cyclohexyl group, the rings b, c and d are each one selected from phenylene group, naphthylene group, and cyclohexyl group, m is an integer of 0 to 2, n is an integer of 0 to 2, q is an integer of 1 or 2, and r is an integer of 1 or 2.

**5.** The resin composition according to any one of claims 1 to 4, wherein a 5% weight loss temperature of the compound (D) in an air atmosphere is 300°C or higher.

**6.** The resin composition according to any one of claims 1 to 5, wherein the compound (D) is a fluorene compound.

**7.** The resin composition according to claim 6, wherein
the fluorene compound is at least one selected from the group of compounds represented by the following general formula (2), and a content of the fluorene compound is 0.5 to 8.0 mass%:

[C2]

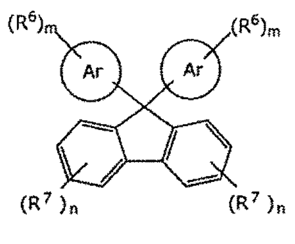

(2)

in the formula (2), the rings Ar each represent a (m+1)valent aromatic hydrocarbon ring,

$R^6$'s each represent a group having a reactive group,
m's each represent an integer of no less than 1,
$R^7$'s each represent a linear or branched alkyl group, and
n's each represent an integer of no less than 0.

**8.** The resin composition according to any of claims 1 to 7, wherein

a content of the acrylic polymer (B) having a reactive group is 0.9 to 40 parts by mass in 100 parts by mass of the acrylic rubber-containing polymer (A), an acrylic polymer (C) having no reactive group that is an optional component, and the acrylic polymer (B) having a reactive group in total.

**9.** The resin composition according to any of claims 1 to 8, wherein
the reactive group in the acrylic polymer (B) is one selected from the group consisting of carboxy group, hydroxy group, acid anhydride group, epoxy group, isocyanate group, amide group, amino group, cyano group, and imine group.

**10.** The resin composition according to any one of claims 1 to 9, wherein
a MFR retention (M2/M1) is 0.85 to 1.15, the MFR retention being a ratio of: a melt flow rate (M1) for 4 minutes in retention time which is measured under conditions that temperature is 240°C, and load is 49 N conforming to JIS K7210; and a melt flow rate (M2) for 20 minutes in retention time which is measured under conditions that temperature is 240°C and load is 49 N conforming to JIS K7210.

**11.** The resin composition according to any one of claims 1 to 10, the resin composition being for a matte film.

**12.** A film comprising:

the resin composition according to any one of claims 1 to 11, wherein
the film has a face having a surface glossiness at 60° (Gs 60°) of less than 100% at least on one side thereof.

**13.** The film according to claim 12, the film having a thickness of 1 to 500 μm.

**14.** The film according to claim 12, wherein a number of fish eyes in 0.5 $m^2$ of the film is less than 500, the film having a thickness of 40 μm.

**15.** The film according to claim 12, wherein a number of fish eyes in 0.5 $m^2$ of the film is less than 400, the film having a thickness of 40 μm.

**16.** A matte acrylic resin laminate film having a laminated structure of a matte acrylic resin layer and a transparent acrylic resin layer, the matte acrylic resin layer comprising the resin composition according to any one of claims 1 to 11.

**17.** A laminate comprising:

a base material; and
the matte acrylic resin laminate film according to claim 16 which is further laminated on the base material.

**INTERNATIONAL SEARCH REPORT**

International application No.
**PCT/JP2022/015734**

**A. CLASSIFICATION OF SUBJECT MATTER**

***B32B 27/30***(2006.01)i; ***C08F 265/00***(2006.01)i; ***C08K 5/00***(2006.01)i; ***C08L 33/00***(2006.01)i; ***C08J 5/18***(2006.01)i
FI: C08L33/00; C08K5/00; C08F265/00; B32B27/30 A; C08J5/18 CEY

According to International Patent Classification (IPC) or to both national classification and IPC

**B. FIELDS SEARCHED**

Minimum documentation searched (classification system followed by classification symbols)

B32B27/30; C08F265/00; C08K5/00; C08L33/00; C08J5/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2009-286960 A (MITSUBISHI RAYON CO LTD) 10 December 2009 (2009-12-10) claims, examples | 1-5, 8-17 |
| Y | | 6, 7 |
| X | WO 2019/244791 A1 (MITSUBISHI CHEMICAL CORPORATION) 26 December 2019 (2019-12-26) claims, examples | 1-5, 8-17 |
| Y | | 6, 7 |
| X | WO 2019/003531 A1 (MITSUBISHI CHEMICAL CORPORATION) 03 January 2019 (2019-01-03) claims, examples | 1-5, 8-17 |
| Y | | 6, 7 |
| X | JP 2012-144714 A (MITSUBISHI RAYON CO LTD) 02 August 2012 (2012-08-02) claims, examples | 1-5, 8-17 |
| Y | | 6, 7 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 June 2022** | **14 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/015734**

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2003-238704 A (MITSUBISHI RAYON CO LTD) 27 August 2003 (2003-08-27) claims, examples | 1-5, 8-17<br>6, 7 |
| Y | JP 60-94494 A (MITSUI SEKIYU KAGAKU KOGYO KK) 27 May 1985 (1985-05-27) claims, p. 4, upper right column, section (C), examples | 6, 7 |

Form PCT/ISA/210 (second sheet) (January 2015)

**INTERNATIONAL SEARCH REPORT**
**Information on patent family members**

International application No.
**PCT/JP2022/015734**

| Patent document cited in search report | Publication date (day/month/year) | Patent family member(s) | Publication date (day/month/year) |
|---|---|---|---|
| JP 2009-286960 A | 10 December 2009 | (Family: none) | |
| WO 2019/244791 A1 | 26 December 2019 | US 2021/0115240 A1<br>claims, examples<br>EP 3812418 A1<br>CN 112368323 A | |
| WO 2019/003531 A1 | 03 January 2019 | US 2020/0115537 A1<br>claims, examples<br>EP 3647353 A1<br>CN 110832023 A | |
| JP 2012-144714 A | 02 August 2012 | (Family: none) | |
| JP 2003-238704 A | 27 August 2003 | (Family: none) | |
| JP 60-94494 A | 27 May 1985 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019244791 A1
- JP 2020180184 A
- JP 2808251 B
- WO 9728950 A1


### Non-patent literature cited in the description


- Polymer Handbook. 1989
- *J. Am. Chem. Soc.,* 1992, vol. 114, 10024
- *CHEMICAL ABSTRACTS,* 91788-83-9
- *CHEMICAL ABSTRACTS,* 64022-61-3
- *CHEMICAL ABSTRACTS,* 101357-36-2
- *CHEMICAL ABSTRACTS,* 85631-00-1
- *CHEMICAL ABSTRACTS,* 101357-37-3
- *CHEMICAL ABSTRACTS,* 85631-01-2
- *CHEMICAL ABSTRACTS,* 41556-26-7
- *CHEMICAL ABSTRACTS,* 52829-07-9
- *CHEMICAL ABSTRACTS,* 705257-84-7
- *CHEMICAL ABSTRACTS,* 70624-18-9
- *CHEMICAL ABSTRACTS,* 192268-64-7
- *CHEMICAL ABSTRACTS,* 71878-19-8
- *CHEMICAL ABSTRACTS,* 25448-25-3
- *CHEMICAL ABSTRACTS,* 301-13-3
- *CHEMICAL ABSTRACTS,* 3076-63-9
- *CHEMICAL ABSTRACTS,* 77745-66-5
- *CHEMICAL ABSTRACTS,* 13023-13-7
- *CHEMICAL ABSTRACTS,* 2082-80-6